(19) Europäisches Patentamt
European Patent Office
Office européen des brevets

(11)     EP 2 216 899 B1

(12)     EUROPEAN PATENT SPECIFICATION

(45) Date of publication and mention
of the grant of the patent:
**08.11.2017   Bulletin 2017/45**

(51) Int Cl.:
*H02P 25/034* $^{(2016.01)}$

(21) Application number: **10152684.6**

(22) Date of filing: **04.02.2010**

(54)  **Control techniques for motor driven systems**

Steuerungsverfahren für motorbetriebene Systeme

Techniques de contrôle pour systèmes motorisés

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **09.02.2009   US 367883
09.02.2009   US 150958 P
09.02.2009   US 367938
09.09.2009   US 555936
02.10.2009   US 572559**

(43) Date of publication of application:
**11.08.2010   Bulletin 2010/32**

(73) Proprietor: **Analog Devices, Inc.
Norwood, MA 02062-9106 (US)**

(72) Inventors:
• **Lyden, Colin
County Cork (IE)**
• **Calpe-Maravilla, Javier
46680, Algemesi (ES)**
• **Murphy, Mark
County Clare (IE)**
• **English, Eoin
County Limerick (IE)**
• **O'Connor, Denis
County Cork (IE)**

(74) Representative: **Beck, Simon Antony et al
Withers & Rogers LLP
4 More London Riverside
London SE1 2AU (GB)**

(56) References cited:
WO-A1-2009/116453      US-A- 4 649 328
US-A- 5 736 824      US-A- 5 786 678

**Description**

RELATED APPLICATION

This application claims the benefit of priority from United States provisional application "Control Protocols for Motor-Driven Mechanical Systems", serial number 61/150,958, filed February 9, 2009 the disclosure of which is incorporated herein by reference in its entirety.

This application is a continuation-in-part and claims priority to co-pending applications "Control Techniques for Motor Driven Systems" having serial numbers 12/367,883 and 12/367,938, both filed on February 9, 2009, the disclosures of which are incorporated herein by reference in their entirety.

BACKGROUND

The present invention relates to motor control and control of motor driven systems. In particular, it relates to control of motor driven systems that minimize ringing or 'bounce' in the mechanical systems that are under motor control.

Motor driven translational systems are commonplace in modern electrical devices. They are used when it is necessary to move a mechanical system within a predetermined range of motion under electrical control. Common examples can include autofocus systems for digital cameras, video recorders, portable devices having such functionality (e.g., mobile phones, personal digital assistants and hand-held gaming systems) and laser drivers for optical disc readers. In such systems, a motor driver integrated circuit generates a multi-value drive signal to a motor which, in turn, drives a mechanical system (e.g. a lens assembly, in the case of an auto-focus system). The motor driver generates the drive signal in response to an externally supplied codeword. The code word often is a digital value that identifies a location within the mechanical system's range of motion to which the motor should move the mechanical system. Thus, the range of motion is divided into a predetermined number of addressable locations (called "point" herein) according to the number of code words allocated to the range of motion. The drive signal is an electrical signal that is applied directly to the motor to cause the mechanical system to move as required.

Although the types and configurations of the mechanical systems typically vary, many mechanical systems can be modeled as a mass coupled to a spring. When a motor moves the mass according to the drive signal, the motion generates other forces within the system which can cause the mass to oscillate around the new location at some resonant frequency ($f_R$). For example, resonant frequencies of approximately 110 hz have been observed in consumer electronic products. Such oscillation typically diminishes over time but it can impair performance of the device in its intended function by, for example, extending the amount of time that a camera lens system takes to focus an image or the time a disk reader takes to move to a selected track.

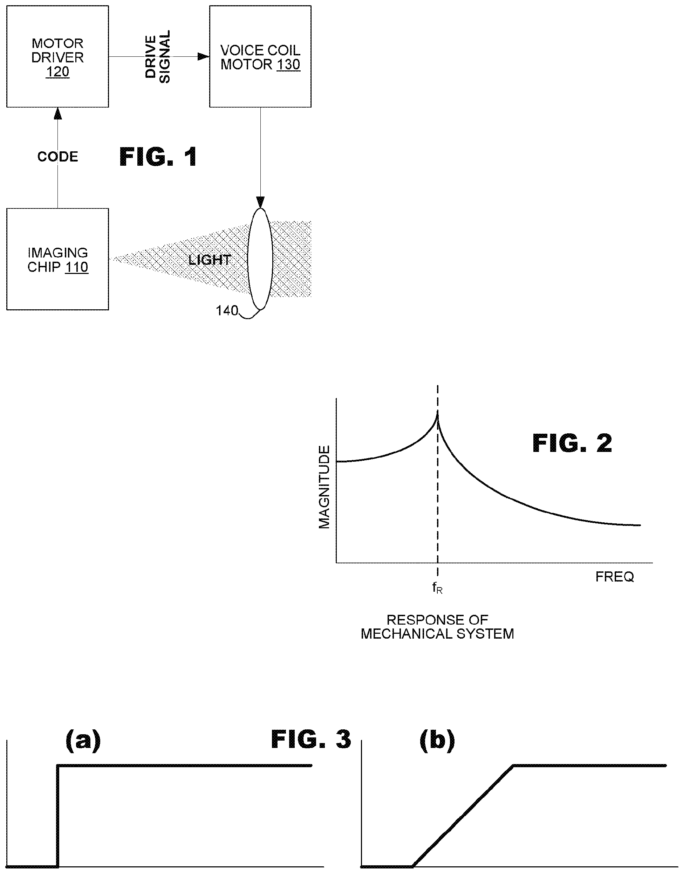

FIG. 1 is a simplified block diagram of a motor-driven system commonly used in lens drivers. The system includes an imaging chip 110, a motor driver 120, a voice coil motor 130 and a lens 140. The motor driver generates a drive signal to the voice coil motor in response to a code provided by the imaging chip. In turn, the voice coil motor moves the lens within its range of motion. Movement of the lens changes the way the lens focuses incoming light on a surface of the imaging chip, which can be detected and used to generate new codes to the motor driver. FIG. 2 is a frequency plot of possible response of the system of FIG. 1, illustrating a resonant frequency at frequency $f_R$.

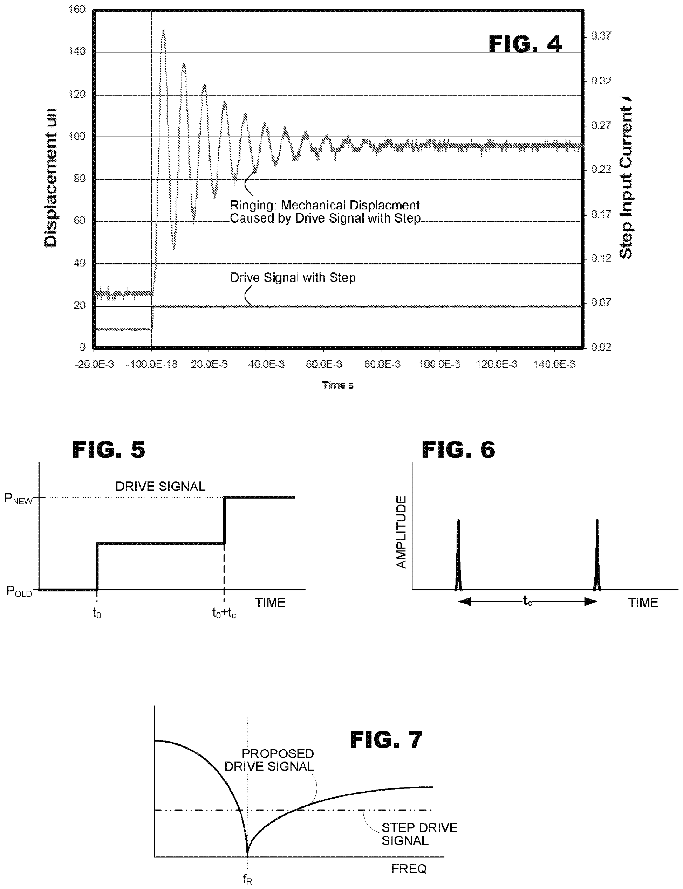

FIG. 3 illustrates two drive signals generated by conventional motor drivers. A first drive signal is a step function, that changes from a first state to a second state as a discontinuous jump (FIG. 3(a)). The second illustrated drive signal is a ramp function that changes from the first state to the second state at a fixed rate of change (FIG. 3(b)). Both types of drive signals, however, cause the ringing behavior that impairs performance as noted above. FIG. 4, for example, illustrates ringing observed in one such mechanical system.

The inventors have observed that the ringing behavior of such motor-driven systems unnecessarily extends the settling times of such mechanical systems and degrades performance. Accordingly, there is a need in the art for such motor-driven systems that can be driven according to a digital codeword and avoids the oscillatory behavior noted in these systems.

WO2009/116453 discloses a camera system for reducing resonant oscillation of an actuator such as a voice coil motor. The motor signal monotonically increases and then monotonically decreases on a clock basis.

SUMMARY

According to a first aspect of this disclosure there is provided a method as claimed in claim 1.
According to a second aspect of this disclosure there is provided a method as claimed in claim 6.
According to a third aspect of this disclosure there is provided an apparatus as claimed in claim 13.
According to a fourth aspect of this disclosure there is provided an apparatus as claimed in claim 14.

## BRIEF DESCRIPTION OF THE DRAWINGS

FIG. 1 is a block diagram of an exemplary mechanical system suitable for use with the present invention.

FIG. 2 is a graph of frequency response of an exemplary mechanical system and oscillation that may occur during activation

FIG. 3 illustrates conventional drive signals for mechanical systems.

FIG. 4 illustrates response of a mechanical system observed under a unitary step drive signal.

FIG. 5 illustrates a drive signal according to an embodiment of the present invention.

FIG. 6 is a graph illustrating height and position of the drive signal of FIG. 5.

FIG. 7 is a graph illustrating energy distribution by frequency of a drive signal of the present invention.

FIG. 8 illustrates response of a mechanical system observed under a drive signal such as shown in FIG. 5.

FIG. 9 is a block diagram of a system according to an embodiment of the present invention.

FIG. 10 is a graph illustrating energy distribution by frequency of another drive signal of the present invention.

FIG. 11 is a block diagram of a system according to an embodiment of the present invention.

FIG. 12 is a graph illustrating other exemplary drive signals according to an embodiment of the present invention.

FIG. 13 is a simplified block diagram of a drive signal generator according to an embodiment of the present invention.

FIG. 14 is a graph illustrating another exemplary drive signal according to an embodiment of the present invention.

FIG. 15 is a graph illustrating a frequency response of an exemplary filtering system.

FIG. 16 is a simplified block diagram of a drive signal generator according to another embodiment of the present invention.

FIG. 17 is a simplified block diagram of a drive signal generator according to another embodiment of the present invention.

FIG. 18 is an exemplary graph illustrating typical displacement of a mechanical system (after settling) versus an applied drive signal.

FIG. 19 is a graph illustrating an exemplary drive signal according to a further embodiment of the present invention.

FIG. 20 is a block diagram of another mechanical system suitable for use with the present invention

FIG. 21 is a simplified diagram of a MEMS switch system according to an embodiment of the present invention.

FIG. 22 is a simplified diagram of a MEMS mirror control system according to an embodiment of the present invention.

FIG. 23 is a simplified diagram of a haptic control system according to an embodiment of the present invention.

FIG. 24 is a simplified diagram of a disk reader according to an embodiment of the present invention.

FIG. 25 is a simplified block diagram of a drive signal generator according to another embodiment of the present invention.

Fig. 26 is a graph illustrating exemplary drive signals according to an embodiment of the present invention.

FIG. 27 is a simplified diagram of motor-driven system suitable for use with the present invention.

FIG. 28 is a simplified block diagram of a drive signal generator according to another embodiment of the present invention.

FIG. 29 shows a simplified process flow for determining a resonant frequency.

FIG. 30 illustrates response of a mechanical system observed under a test drive signal.

FIG. 31 shows a simplified process flow for updating a resonant frequency.

FIG. 32(a) shows a simplified process flow for adjusting a resonant frequency.

FIG. 32(b) shows a simplified process flow for adjusting a resonant frequency.

FIG. 33 is a simplified block diagram of a drive signal generator according to another embodiment of the present invention.

FIG. 34 shows a simplified process flow for determining a threshold voltage.

FIG. 35 illustrates response of a mechanical system observed under test unit step drive signals.

## DETAILED DESCRIPTION

Embodiments of the present invention provide a drive signal for a motor-driven mechanical system whose frequency distribution has zero (or near zero) energy at the expected resonant frequency of the mechanical system. The drive signal may be provided in a series of steps according to a selected row of Pascal's triangle, wherein the number of steps equals the number of entries from the selected row of Pascal's triangle, each step has a step size corresponding to a respective entry of the selected row of Pascal's triangle, and the steps are spaced from each other according to a time constant determined by an expected resonant frequency of the mechanical system. Alternatively, the stepped drive signal may be provided as a series of uniform steps according to a selected row of Pascal's triangle, in which the steps are spaced into a number of intervals corresponding to the number of entries from the selected row of Pascal's triangle and each interval includes a number of steps corresponding to a respective entry from the selected row of Pascal's triangle. These techniques not only generate a drive signal with substantially no energy at the expected resonant frequency, they provide a zero-energy "botch" of sufficient width to tolerate systems in which the actual resonant frequency differs from the expected resonant frequencies. The motor driver may also include a detection system to measure properties of a back channel and derive oscillatory characteristics of the mechanical system. Uses of the detection system may include calculating the resonant frequency of the mechanical system and a threshold drive $D_{TH}$ required to move the mechanical system from the starting mechanical stop position. The back channel calculations may be used either to replace or to improve corresponding pre-programmed values.

FIG. 5 is a graph illustrating an exemplary drive signal according to an embodiment of the present invention. The drive signal is a multi-stage step function that changes at times corresponding to a time constant:

$$t_c \cong \frac{1}{2f_R} . \qquad\qquad \text{Eq. 1}$$

This translates to a drive signal with two steps, a first step at time $t_0$, having an amplitude corresponding to approximately one half the level needed to traverse a distance separating a old position ($P_{OLD}$) from a new position ($P_{NEW}$) ($\Delta P = P_{NEW} - P_{OLD}$). A second step may occur at time $t_0 + t_c$, having an amplitude corresponding to the rest of the distance needed to be traversed. FIG. 6 illustrates differential response of the drive signal of FIG. 5.

FIG. 7 is a graph illustrating energy distribution of the drive signal of FIG. 5 by frequency. As shown, the drive signal has non-zero energy distribution at frequencies both above and below the resonant frequency $f_R$. At the resonant frequency $f_R$, the drive signal has zero energy. This energy distribution minimizes energy imparted to the mechanical system in the resonant region and, therefore, avoids oscillation that may occur in such systems.

FIG. 7 also illustrates energy distribution that may occur in a drive signal generated from a unitary step function (phantom). In this graph, the system has non-zero energy at the resonant frequency $f_R$, which causes energy to be imparted to the mechanical system at this frequency. This non-zero energy component at the resonant frequency $f_R$ is believed to contribute to the prolonged oscillation effect observed by the inventors.

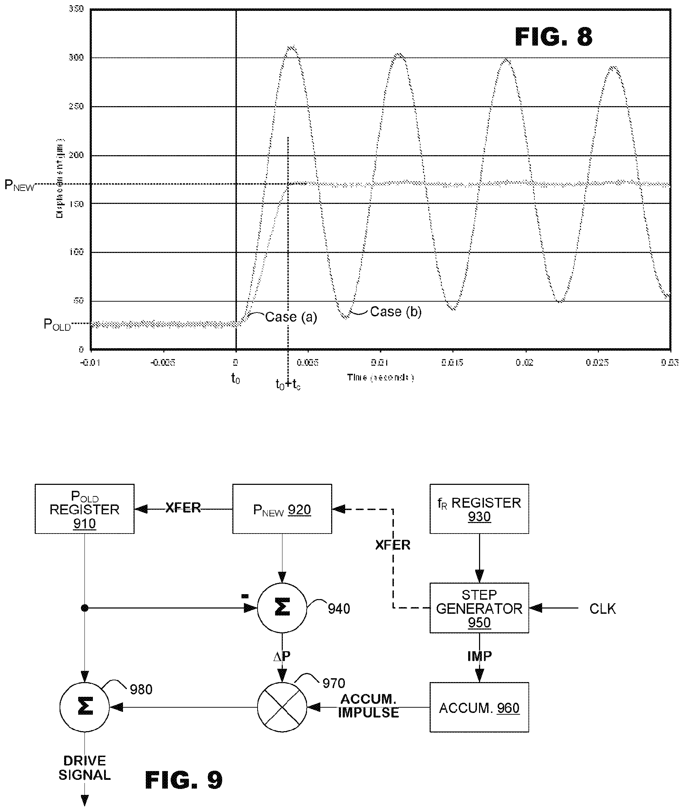

FIG. 8 is a graph that illustrates response of a mechanical system when driven by a drive signal having a shape as shown in FIG. 5 (case (a)). The mechanical system starts at a position $P_{OLD}$ and moves to a position $P_{NEW}$. Activation pulses are applied at times $t_0$ and $t_0+t_C$. In this example, $P_{OLD}$ corresponds to 27 μm (digital code 50) and $P_{NEW}$ correspond to 170 μm (digital code 295), $t_0$ corresponds to t=0 and $t_c$ corresponds to 3.7 ms.

FIG. 8 compares the mechanical system's response under the drive signal proposed herein (case (a)) against the response observed when driven by a drive signal according to a unitary step function (case (b)). Whereas in case (a) the mechanical system has settled on the new position $P_{NEW}$ after about 4 ms, the same mechanical system exhibits prolonged oscillation in case (b). Even after 30 ms, the mechanical system continues to oscillate about the $P_{NEW}$ position. Accordingly, the drive signal of FIG. 5 provides substantially faster settling times than conventional drive signals.

FIG. 9 is a block diagram of a system 900 according to an embodiment of the present invention. As shown, the system may include registers 910-930 for storage of data representing the old and new positions and the expected resonant frequency of the mechanical system. The system 900 may include a subtractor 940 to calculate ΔP from $P_{NEW}$ and $P_{OLD}$. The system 900 further may include a step generator 950 that receives a system clock and generates pulses to an accumulator 960 according to timing determined from Eq. 1. The step generator 950 may generate pulses, for example, as shown in FIG. 6, having amplitudes each corresponding to approximately one half the total distance to be traversed by the mechanical system. The accumulator 960 may sum the aggregate value of pulses generated by the step generator 950 and output the aggregate value to a multiplier 970 that also receives the ΔP value from the subtractor. Thus, the multiplier 970 generates a signal corresponding to the multi-step increments shown in FIG. 5. The output of the multiplier 970 may be input to an adder 980 that also receives the $P_{OLD}$ value from register 910. Thus, the adder 980 may generate a time varying output signal sufficient to drive a mechanical system from a first position to a second position with minimal settling time.

When the mechanical system completes its translation from the old position to the new position, the old position may be updated. In the system illustrated in FIG. 9, after the step generator 950 generates its final step to the accumulator, it also may generate a transfer signal to registers 910 and 920 to cause the old position register 910 to be updated with data from the new position register 920.

The drive signal of FIG. 5 works well if the resonant frequency $f_R$ of the mechanical system matches the 'notch' of the drive signal precisely (e.g. within ±3%). Unfortunately, system manufacturers often do not know the resonant frequency of their mechanical systems precisely. Moreover, particularly in consumer devices where system components must be made inexpensively, the resonant frequency can vary across different manufacturing lots of a common product. Thus, although a motor driver might be designed to provide a notch at an expected resonant frequency $f_{RE}$, there can be a substantial difference between the expected resonant frequency and the actual resonant frequency of the mechanical system ($f_{RM}$).

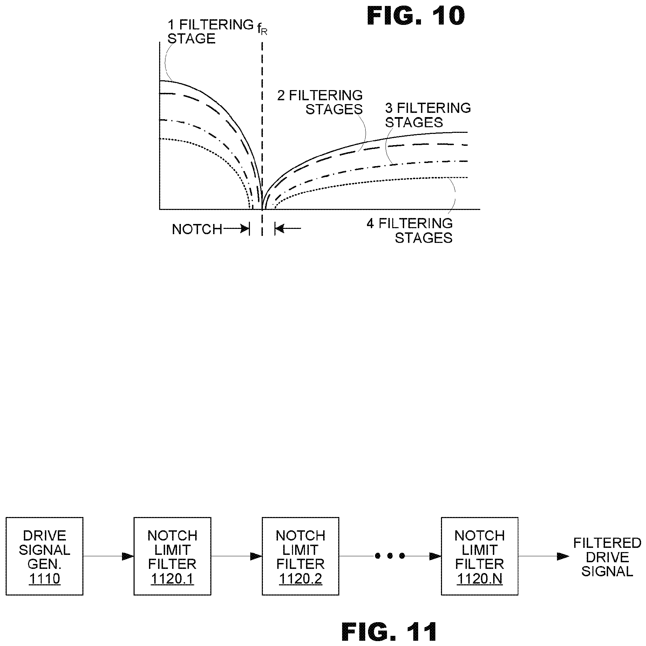

To accommodate such uses, the principles of the present invention may be expanded to expand the frequency notch to allow greater tolerance in the resonant frequencies used with such systems. One such expansion includes providing multiple layers of filtering to 'widen' the notch. FIG. 10 is a graph showing the expected effects of multiple layers of filtering. Four such layers of filtering are illustrated. Each such additional layer of filtering expands a "botch" of frequencies for which there is zero energy imparted to the system. Although each layer of filtering diminishes the aggregate amount of energy imparted to the system and, therefore, may cause slower movement by the mechanical system, such filtering may be advantageous to overall system operation by reducing settling times for mechanical systems even when the resonant frequency of such systems cannot be predicted with precision.

FIG. 11 illustrates a simplified block diagram of a system 1100 according to another embodiment of the present invention. The system includes a drive signal generator 1110 and one or more notch limit filters 1120.1-1120.N provided in series. A first filter 1120.1 in the system 1100 may accept a drive signal from the drive signal generator 1110. Each of the N filters (N≥1) may filter its input signal at an expected resonant frequency ($f_{RE}$). Because the filters are provided in cascade, the multiple filters may operate collectively to provide a filtered drive signal having a notch that is wider than would occur from a single filter system. Alternatively, the additional notches may be placed at different frequencies around the expected single resonant frequency in order to widen the filter's attenuation band.

In the time domain, the additional levels of filtering provide a step response as follows:

Table 1

| TIME | 0 | $T_C$ | $2T_C$ | $3T_C$ | $4T_C$ |
|---|---|---|---|---|---|
| 1 Stages | 1 | 1 | | | |
| 2 Stages | 1 | 2 | 1 | | |

(continued)

| TIME | 0 | $T_C$ | $2T_C$ | $3T_C$ | $4T_C$ |
|---|---|---|---|---|---|
| 3 Stages | 1 | 3 | 3 | 1 | |
| 4 Stages | 1 | 4 | 6 | 4 | 1 |

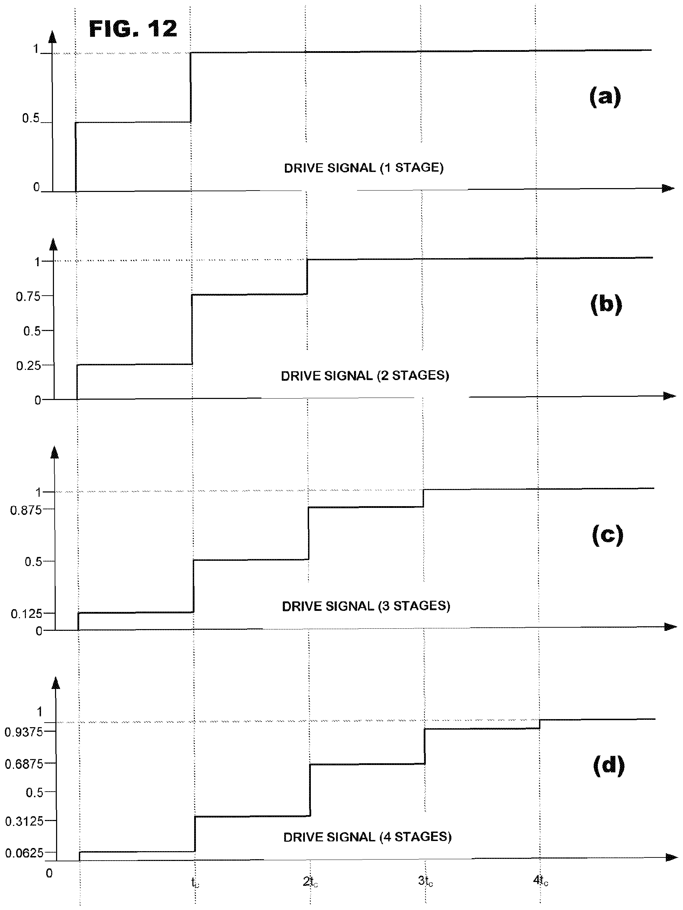

The output drive signals follow the step responses as shown in Table 1 after having been normalized (the steps are scaled so their sum equals 1). For example, with respect to a three-stage system, the step responses would be set to 1/8, 3/8, 3/8 and 1/8 at each of the times noted in Table 1. Drive signals are generated from a sum of the step responses over time. Thus, the drive signals of Table 1 may generate waveforms having the shape shown in FIG. 12.

The progression shown in Table 1 matches the progression of Pascal's Triangle. In an embodiment, an arbitrary N stage filter may be employed by using a progression taken from a corresponding $N^{th}$ row of Pascal's Triangle. An arbitrary number of stages may be used as desired to protect against uncertainty in the expected resonant frequency of the mechanical system. Although any number of stages may be used, higher numbers of stages involve increased settling times and therefore the number of stages should be chosen with care.

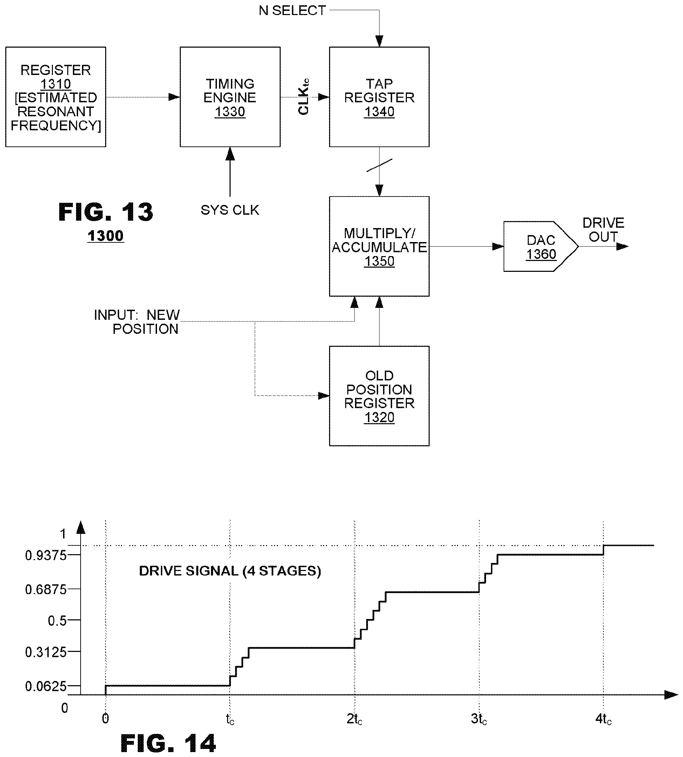

FIG. 13 is a block diagram of a signal generator 1300 according to an embodiment of the present invention. The signal generator 1300 may include a pair of registers 1310, 1320 to store data representing the estimated resonant frequency and the current position $P_{OLD}$ of the mechanical system. A timing engine 1330 and a tap register 1340 may generate an output corresponding to an appropriate step pattern such as those illustrated in Table 1. Specifically, the timing engine 1330 may clock the tap register 1340 at a rate corresponding to time intervals $t_c$ determined by the stored estimated resonant frequency. The tap register 1340 may store data representing the normalized values of Pascal's triangle. Based on a control signal (N select) identifying the row of Pascal's triangle to be applied, the tap register 1340 sequentially may output step values corresponding to each entry in the row on each cycle of the $t_C$ clock.

A multiply accumulate (MAC) unit 1350 may receive data representing the new position $P_{NEW}$, the old position $P_{OLD}$ and the step pattern data from the tap register 1340. Mathematically, the MAC 1340 may generate a digital drive code as:

$$Drive(t) = P_{OLD} + (P_{NEW} - P_{OLD}) \bullet \sum step(t),$$

where step(t) represents the step response of the selected pattern and t varies across all $t_c$ intervals that are relevant for the selected pattern. A digital-to-analog converter (DAC) 1360 may generate an analog drive output signal from the MAC's digital output. The output signal may be generated as current or voltage.

The solution of FIG. 13 provides a wider notch as desired over the embodiment of FIG. 9 but does so at increased complexity. Normalized values of each row of Pascal's triangle must be stored in memory at the tap register or calculated dynamically. Such complexity may be avoided in another embodiment of the present invention in which timing misalignment is applied to the step graphs.

Consider the step response shown in Table 1. The response of any stage N (say n=3) is the sum of a prior stage N-1 and a replica of the same (stage N-1) delayed by a time constant $t_c$. For example:

Table 2

| | | | TIME CONSTANT | | | |
|---|---|---|---|---|---|---|
| NO STAGES | 0 | | $T_C$ | | $2T_C$ | $3T_C$ | $4T_C$ |
| 1 | 1 | | 1 | | | | |
| | ↓ | ↘ | ↓ | ↘ | | | |
| 2 | 1 | | 2 | | 1 | | |
| | ↓ | ↘ | ↓ | ↘ | ↓ | ↘ | |
| 3 | 1 | | 3 | | 3 | 1 | |
| | ↓ | ↘ | ↓ | ↘ | ↓ | ↘ | ↓ | ↘ |
| 4 | 1 | | 4 | | 6 | 4 | 1 |

In an embodiment, the system generates step response patterns that represent replica signals that are misaligned with respect to each other slightly in time (shown as Δt in Table 3 below). The step response patterns may be represented as follows:

Table 3

| N | t0 | $T_C$ | | | | $2t_C$ | | | | | | $3t_C$ | | | | 4tc |
|---|----|----|-----|------|------|----|-----|------|------|------|------|----|-----|------|------|-----|
|   |    | +0 | +Δt | +2Δt | +3Δt | +0 | +Δt | +2Δt | +3Δt | +4Δt | +5Δt | +0 | +Δt | +2Δt | +3Δt |     |
| 1 | 1  | 1  |     |      |      |    |     |      |      |      |      |    |     |      |      |     |
| 2 | 1  | 1  | 1   |      |      | 1  |     |      |      |      |      |    |     |      |      |     |
| 3 | 1  | 1  | 1   | 1    |      | 1  | 1   | 1    |      |      |      | 1  |     |      |      | 1   |
| 4 | 1  | 1  | 1   | 1    | 1    | 1  | 1   | 1    | 1    | 1    | 1    | 1  | 1   | 1    | 1    | 1   |

The step patterns may generate a drive signal such as shown in the example of FIG. 14. In the example illustrated, N=4.

In practice, the Δt time intervals may be provided by a system clock within the motor driver, which may be much faster than the $t_c$ time interval calculated from the expected resonant frequency $f_R$. FIG. 14 is not drawn to scale. In one embodiment, some coefficients may be swapped with each other in order to widen the attenuation band. Coefficient swapping may reduce the requirements of small $t_c$ time intervals. Δt, for example, may be set to $1/4t_c$ or $1/8t_c$ when coefficient swapping is utilized.

A time domain embodiment may include a cascade of unequally distributed notches provided by a convolution of N filters, each filter corresponding to the first row of Pascal's triangle. The filters may be tuned to present notches around the nominal resonance frequency. The filters may also be convolved using a common time base as defined by a minimum common multiplier of their time constant $t_c$.

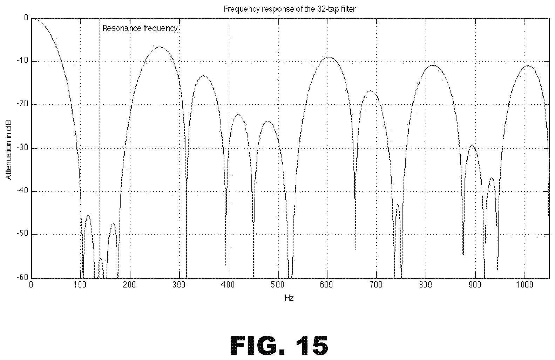

One example may include 4 filters whose responses are {1 00000 1} {1 000000 1} {1 0000000 1} and {1 000000000 1}. When the 4 filters are convolved with a time base of approximately 30 times the resonance period, a 32-tap filter with coefficients {1 0 0 0 0 0 1 1 1 0 1 0 0 1 1 1 1 1 1 0 0 1 0 1 1 1 0 0 0 0 0 1} results. FIG. 15 illustrates the frequency response of the example 32-tap filter for a 140 Hz nominal resonance frequency.

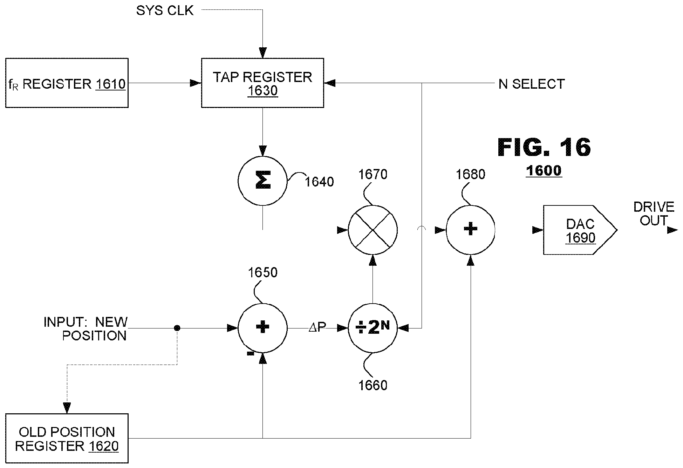

FIG. 16 illustrates a drive signal generator 1600 according to another embodiment of the present invention. The drive signal generator may include a pair of registers 1610, 1620 to store data representing the estimated resonant frequency of the mechanical system and a current position of the mechanical position ($P_{OLD}$). The drive signal generator may include a tap register 1630 that stores distributed step patterns such as those shown in Table 3. In response to each iteration of a system clock (corresponding to At), the tap register 1630 may shift out a single bit of the step pattern. The tap register may include buffer bits (zeroes) corresponding to time intervals separating each time constant $t_c$. The shifted bits may be output to an accumulator 1640 which computes a running sum of pulses over time.

A subtractor 1650 may calculate ΔP from the old and new positions ($ΔP=P_{NEW}-P_{OLD}$). A divider may divide the ΔP by a factor $1/2^N$, which may be implemented with a simple bit shift, where N represents the row of Pascal's triangle currently in use. A multiplier 1670 and adder 1680 complete generation of the drive signal which, mathematically, may be represented as:

$$Drive(t) = P_{OLD} + \frac{1}{2^N}\left(P_{NEW} - P_{OLD}\right) \bullet \sum step(t).$$

In this embodiment, the step(t) term again represents pulses from the tap register. In this embodiment, however, the tap register need not store normalized step values. Instead, the tap register may store single bit values (1s) at each of the Δt positions for which incremental contribution is required (see, Table 3). Within each of the N rows, the single bit steps sum to $2^N$ In this embodiment, the divider 1660 accomplishes normalization while permitting a simple implementation of the tap register. The DAC may generate an analog signal, either voltage or current, from the codeword output by the adder 1680.

While FIG. 16 illustrates the tap register 1630 being clocked by a system clock, the tap register alternatively may be clocked by a timing generator (not shown), that becomes active during a time period defined by each time constant $t_C$ and, when active, clocks the tap register at a rate of Δt. When each burst of pulses concludes, the timing generator may be deactivated until the next $t_C$ interval occurs. This second embodiment permits the size of the tap register to be made smaller but increases complexity of the clocking system.

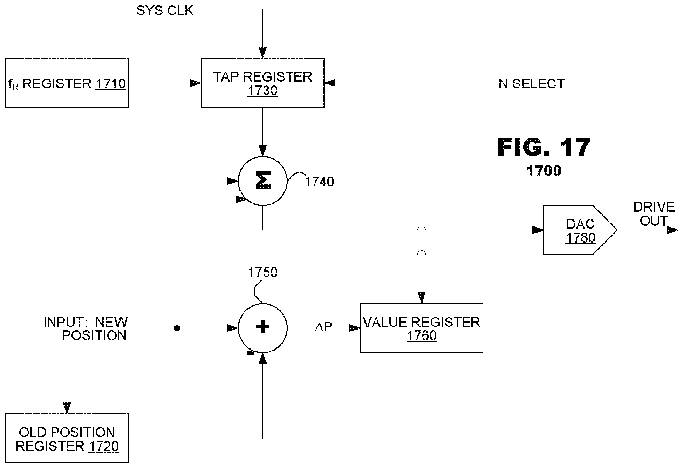

FIG. 17 illustrates a drive signal generator 1700 according to another embodiment of the present invention. The drive signal generator may include a pair of registers 1710, 1720 to store data representing the estimated resonant frequency of the mechanical system and a current position of the mechanical position ($P_{OLD}$). The drive signal generator may include a tap register 1730 that stores distributed step patterns such as those shown in Table 3. In response to each iteration of a system clock (corresponding to At), the tap register 1730 may shift out a single bit of the step pattern. The tap register may include buffer bits (zeroes) corresponding to time intervals separating each time constant $t_c$. The shifted bits may be output to an accumulator 1740.

In this embodiment, the $P_{OLD}$ value may be preloaded into the accumulator 1740. A subtractor 1750 may calculate $\Delta P$ from the old and new positions ($\Delta P=P_{NEW}-P_{OLD}$). Value register 1760 may use N bit shifting to divide $\Delta P$ by $2^N$ in order to calculate step sizes. The calculated step size may be stored in the value register 1760. Accumulator 1740, which is initialized with the old position value, may be updated with the addition of the content value contained in the value register 1760 each time the tap register 1730 shifts a bit with a value of one. The DAC 1780 may generate an analog signal, either voltage or current, from the codeword output by the accumulator 1740.

The embodiments of FIG. 16 and 17 are advantageous because they provide for simpler implementation than the embodiment of Table 1 & FIG. 13. The step responses of the FIG. 14/Table 3 embodiment are uniform and, therefore, there is no need to develop fractional step response values as discussed with respect to Table 1. As with the FIG. 13 embodiment, the FIG. 16 and FIG. 17 embodiments also contribute to a wider notch as compared to the FIG. 5 embodiment.

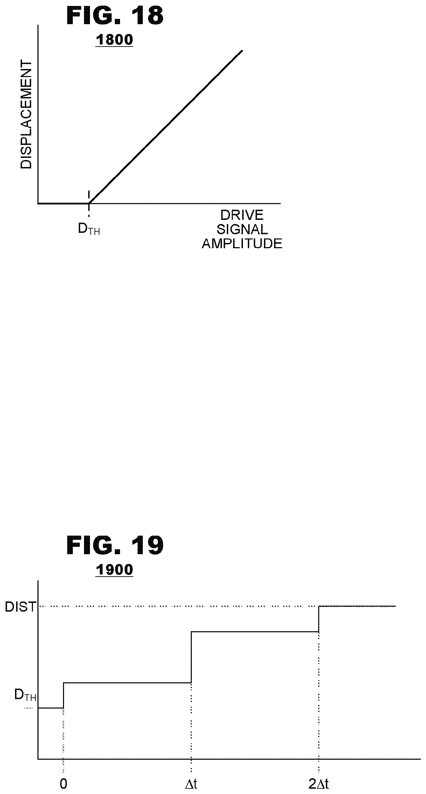

Many mechanical systems do not move from the starting mechanical stop position immediately upon application of a drive signal. There usually are spring forces or other inertial forces that are not overcome until the amplitude of the drive signal reaches some threshold value $D_{TH}$ (FIG. 18). The threshold value often is unknown and may vary from manufacturing lot to manufacturing lot. Furthermore, the threshold value may vary according to the mechanical system orientation.

To improve response times, when moving from a start position corresponding to a mechanical stop position, embodiments of the present invention may advance the drive signal to a value corresponding to the threshold drive signal $D_{TH}$ (FIG. 19) and calculate $\Delta P$ as a difference between $D_{TH}$ and the drive signal level sufficient to move the mechanical system to the destination position. When applying a drive signal to such a system, the drive signal may include the $D_{TH}$ level applied immediately from the motor drive and a time-varying component corresponding to a stepped drive signal of one of the foregoing embodiments (FIGS. 5, 12 and/or 14) provided atop the $D_{TH}$ level. The threshold drive $D_{TH}$ may be estimated in a "blind" fashion (e.g. based on expected properties of the mechanical systems, which may or may not be true). Alternatively, the threshold value may be programmed into the system via a register.

The principles of the present invention find application in a variety of electrically-controlled mechanical systems. As discussed above, they may be used to control lens assemblies in auto-focus applications for cameras and video recorders such as shown in FIG. 1. It is expected that systems using the drive signals discussed herein will achieve improved performance because the lens assemblies will settle at new locations faster than may occur in systems with conventional drive signals. Accordingly, cameras and video recorders will generate focused image data faster than previously achieved, which we generate greater throughput.

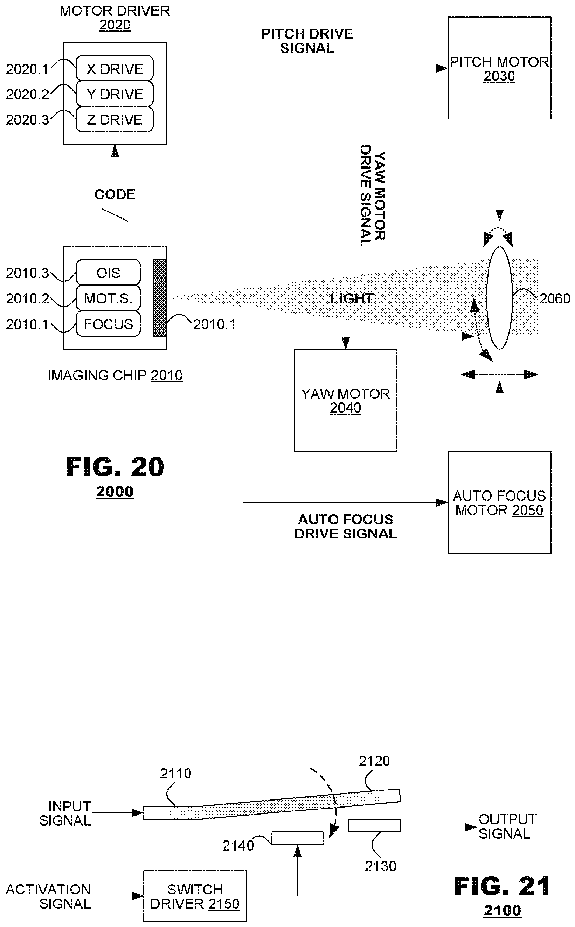

FIG. 20 illustrates another system 2000 according to an embodiment of the present invention. The system 2000 of FIG. 20 illustrates a lens control system with multiple dimensions of movement. This system, as with FIG. 1, may include an imaging chip 2010, a motor driver 2020, various motors 2030-2050 and a lens 2060. Each motor 2030-2050 may drive the lens in a multi-dimensional space. For example, as shown in FIG. 20, an auto focus motor 2030 may move the lens laterally with respect to the imaging chip 2010, which causes light to be focused in a light-sensitive surface 2010.1 of the chip 2010. A pitch motor 2040 may rotate the lens through a first rotational axis to control orientation of the lens 2060 in a first spatial dimension. A yaw motor 2050 may rotate the lens through a second rotational axis, perpendicular to the first rotational axis, to control orientation of the lens 2060 in another spatial dimension.

In the embodiment of FIG. 20, the imaging chip 2010 may include processing units to perform auto-focus control 2010.1, motion detections 2010.2 and optical image stabilization (OIS) 2010.3. These units may generate codewords for each of the drive motors 2030-2050, which may be output to the motor driver 2020 on an output line. In the embodiment shown in FIG. 20, the codewords may be output to the motor driver 2020 in a multiplexed fashion. The motor driver 2020 may include motor drive units 2020.1-2020.3 to generate analog drive signals for each of the drive motors 2030-2050. The analog drive signals may be generated according to the foregoing embodiments discussed herein. As with the case of a one dimensional lens driver, it is expected that a multi-dimensional lens driver that is driven as shown in the foregoing embodiments will achieve faster settling times than lens drivers driven according to conventional drive signals.

The principles of the present invention find application in other systems, for example, MEMS-based switches as shown in FIG. 21. Such systems may include a switch member 2110 that moves under control of a control signal between an open position and a closed position. When closed, a movable 'beam' portion 2120 of the switch member 2110 is placed in contact with an output terminal 2130. The control signal is applied to the switch member 2110 through a control terminal 2140 that imparts electrostatic forces upon the switch member 2110 to move it from a normally open position to the closed position. In this regard, the operation of a MEMS switch is known.

According to an embodiment, a MEMS control system may include a switch driver 2150 that, responsive to an actuating control signal, generates a drive signal to the MEMS-switch having a shape such as shown in FIGS. 5, 12 or 14. MEMS switches will possess from which an expected resonant frequency and, by extension, the time constant $t_c$

may be derived. The switch driver 2150 may apply steps having an aggregate amplitude sufficient to move the beam 2120 toward the output terminal 2130. At the conclusion of a final time constant, the switch driver 2150 may apply a final step to halt the beam 2120 at the closed position with minimal oscillation.

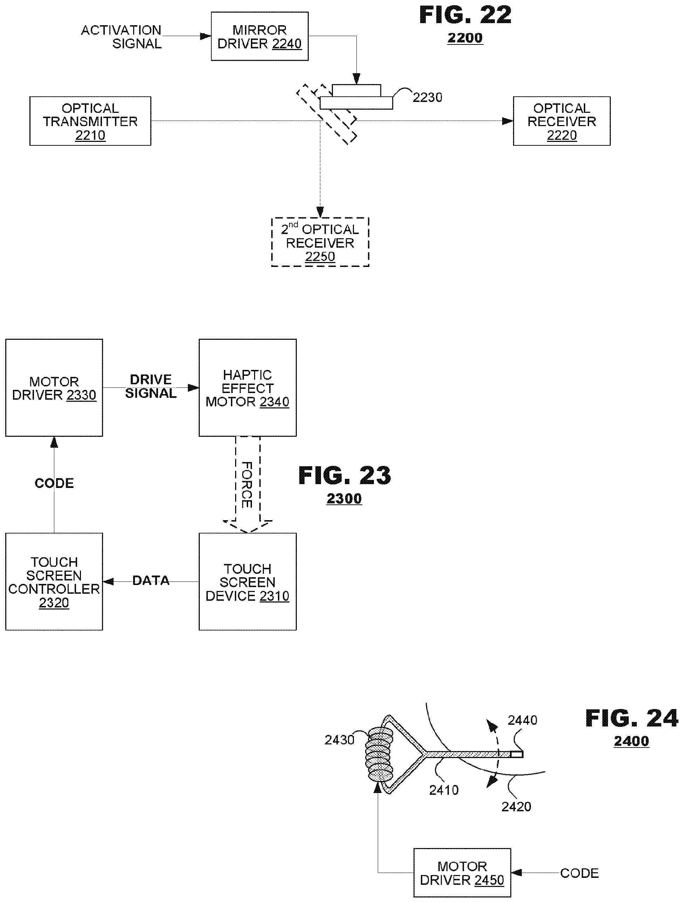

The principles of the present invention also may find application in optical MEMS systems, such as shown in FIG. 22. There, an optical transmitter 2210 and optical receiver 2220 are provided in a common optical path. A MEMS mirror 2230 may be provided along the optical path, which may translate from a first position to a second position under control of a drive signal. In a default state, for example, the MEMS mirror 2230 may be positioned out of the optical path between the transmitter 2210 and the receiver 2220. In an activated state, however, the MEMS mirror 2230 may move to obscure the optical path, which causes the transmitted beam of light to be blocked from reaching the receiver 2220.

According to an embodiment, a MEMS control system may include a mirror driver 2240 that, responsive to an actuating control signal, generates a drive signal to the MEMS-mirror 2230 to cause it to move from a default position to an activated position. The mirror 2230 may possess a mass from which an expected resonant frequency and, by extension, the time constant $t_C$ may be derived. The mirror driver 2240 may apply steps having an aggregate amplitude sufficient to move the mirror 2230 toward the activated position. At the conclusion of a final time constant, the mirror driver 2240 may apply a final step to halt the mirror 2230 at the activated position with minimal oscillation.

The optical system 2200 optionally may include a second receiver 2250 provided along a second optical path that is formed when the mirror 2230 moves to the activated position. In this embodiment, the system 2200 may provide a routing capability for optical signals received by the optical system 2200.

The principles of the present invention may find application in touch sensitive sensor devices that use tactile or haptic feedback to confirm receipt of data. Haptic devices provide feedback that simulates the "click" of a mechanical button or other tactile feedback. Shown in FIG. 23, such devices 2300 may include a touch screen panel 2310 to capture data from an input device, commonly an operator's finger, a stylus or other object. The touch screen panel 2310 generates data to a touch screen controller 2320 that processes the panel data to derive a screen position on which the operator entered data. To provide the haptic feedback, the touch screen controller 2320 may generate a digital codeword to a motor driver, which generates a drive signal to a haptic motor controller 2330. The haptic motor controller 2330 may generate a drive signal to a haptic effect motor 2340 which imparts a force upon a mechanical device within the touch screen panel 2310 that generates the tactile feedback.

According to an embodiment, the motor driver 2330 may generate a drive signal to the haptic effect motor 2340 according to a shape such as shown in FIGS. 12 or 14. The haptic effect motor 2340 and associated mechanical components of the touch screen device may possess a mass from which an expected resonant frequency and, by extension, the time constant $t_C$ may be derived. The motor driver 2330 may apply a series of steps according to a selected row of Pascal's triangle or any embodiments of the present invention described herein. Owing to a varying mass being controlled due to user interaction, the steps may originate from a deeper row (e.g., the 4th row or deeper) of Pascal's triangle than for other applications. It is expected that the stepped pulse drive signal will generate tactile feedback within the touch screen device that begins and concludes sharply and, therefore, provide feedback sensations that strongly mimic mechanical devices.

The principles of the present invention also may find application in optical or magnetic disk readers, which may include swing arms or sled based readers. One common structure for disk readers is illustrated in FIG. 24, which illustrates a motor-driven swing arm 2410 provided over a disk surface 2420. The swing arm may include a motor coil 2430 mounted thereon which, when drive signals are supplied to it, generates magnetic flux that interacts with magnets (now shown) to move the swing arm across a range of motion. In this manner, a read head 2440 provided on the swing arm can address an identified track of information from the disk and read information.

According to an embodiment, a disk reader control system may include a motor driver 2450 that, responsive to a codeword, generates a drive signal to the motor coil 2430 having a shape such as shown in FIGS. 5, 12 or 14. Swing arms (and sleds) may possess inertia from which an expected resonant frequency $f_R$ and, by extension, the time constant $t_c$ may be derived. The motor driver 2450 may apply steps having an aggregate amplitude sufficient to move the disk reader to a new position. At the conclusion of a final time constant, the motor driver 2450 may apply a final step to halt the reader at the addressed position with minimal oscillation.

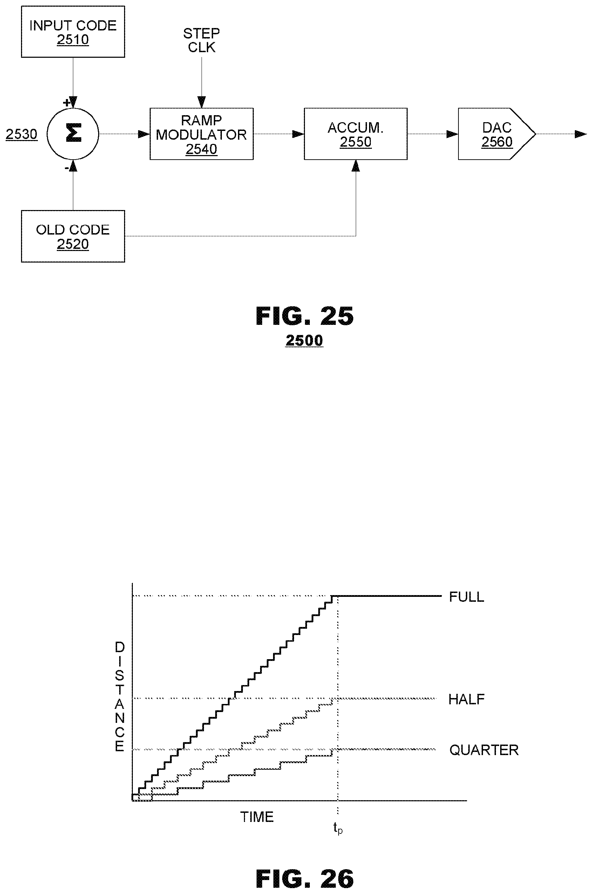

According to an embodiment, a drive signal generator 2500 of FIG. 25 may produce ramp-based motor drive signals with a fixed drive window. In prior motor driver systems, ramp signals are provided with a constant rate of change. In these "slope" ramp signal systems, the time to drive a mechanical system to a desired location is dependant on the distance to be traversed. For example, it would take twice as long to deliver a ramp signal corresponding to a movement 100 points as it would to deliver a ramp signal corresponding to a movement of 50 points. However, "slope" ramp signals require notch filtering and have varied frequency responses. A ramp based motor drive signal with a fixed drive window, on the other hand, may operate with linear filtering and have a constant frequency response.

The drive signal generator 2500 may include an input code register 2510 to store code representing a new position that is to be traversed. The drive signal generator 2500 may include an old code register 2520 to store code representing an old or current position of the mechanical system. A subtractor 2530 may calculate the separation distance between the old and new positions by subtracting the new position code from the old position code.

The drive signal generator 2500 may also include a ramp modulator 2540, clocked at a step clock rate, to generate a step response signal based on the separation distance. The step response may correspond to the individual steps in a particular drive signal. Furthermore, the drive signal generator 2500 may include an accumulator 2550 to generate a digital drive signal in response to the step response signal. The accumulator 2550 may be initialized with a value corresponding to the old code that was maintained from a prior operation. DAC 2560 may generate an analog drive signal from the digital drive signal.

FIG. 26 illustrates examples of ramp-based motor drive signals with a fixed drive window. The signals may cause the mechanical system to reach its desired destination within a predetermined time $t_p$, regardless of the separation distance. For example, FIG. 26 shows drive signals for full-range distance, half-range distance, and quarter-range distance traversal that operate for same predetermined time $t_p$. The predetermined time $t_p$ may be set corresponding to a time the mechanical system takes to traverse a full range displacement at 1 point/cycle. The number of steps taken to reach the desired destination may vary depending on the distance to be traversed. The steps may be distributed across time hence certain steps may 'not be taken.' For example, half-range displacement may have 50% of steps not taken as compared to the steps taken for full-range displacement. Quarter-range displacement, for example, may have 75% of steps not taken as compared to the steps taken for full-range displacement. Other ratios may cause corresponding ratios of step cycles but may also generate irregular patterns.

Drive signal generator 2500 may be used cooperatively with other embodiments described herein. For example, a motor driver system may operate in several modes with one mode being ramp based drive signal with fixed drive window mode.

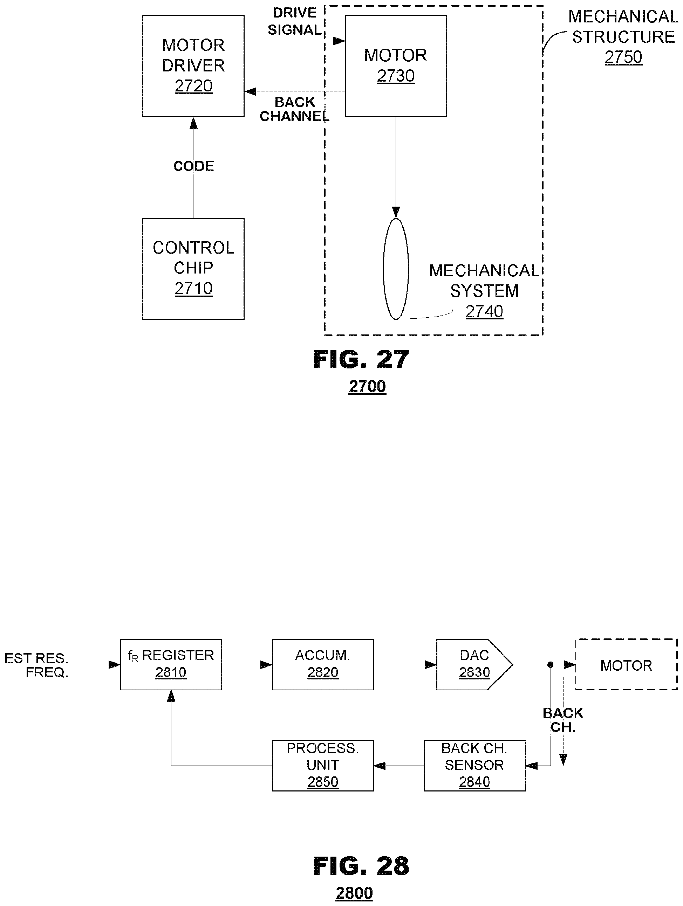

According to an embodiment, the motor-driven system 2700 may include a feedback system as shown in Fig. 27. The feedback system may be a detection system for a back channel, a hall effect sensor, or other suitable feedback devices. The motor-driven system may include a control chip 2710 that sends a code to instruct the motor driver 2720 to drive the mechanical structure 2730. The mechanical structure 2750 may include a motor 2730 and mechanical system 2740. The motor driver may transmit a drive signal to the motor 2730 via a signal line connecting the motor driver 2720 and the motor 2730. The motor 2730, responsive to the drive signal, moves the mechanical system 2740, which may cause oscillations or ringing behavior in the mechanical structure 2740. The oscillations may be captured by a feedback system. The oscillations induce an electrical signal in the signal line that extends between the motor 2730 and motor driver 2720. The back channel may be on the same signal line the drive signal is transmitted or may be on a separate signal line.

The back channel detection system may calculate the resonant frequency, $f_R$, of the mechanical system. System manufacturers often do not know the resonant frequency of their mechanical systems precisely. Moreover, particularly in consumer devices where system components must be made inexpensively, the resonant frequency can vary across different manufacturing lots of a common product. Therefore, the calculation of the mechanical system's actual resonant frequency rather than depending on the manufacturer's expected resonant frequency improves precision in the mechanical system during use and reduces settling time because of stop band width reduction.

Fig. 28 illustrates an embodiment of a drive signal generator 2800 that may be incorporated in a motor driver to calculate the actual resonant frequency of the mechanical system. The drive signal generator 2800 may include an accumulator 2820 to generate a digital test drive signal, digital-to-analog converter (DAC) 2830 to generate an analog test drive output signal from the accumulator's digital output, which is then applied to the motor of the mechanical structure, a back channel sensor 2840 to capture a back channel electrical signal; a processing unit 2850 to calculate the actual resonant frequency; and a register 2810 that stores the calculated resonant frequency. The analog signal may be generated as current or voltage.

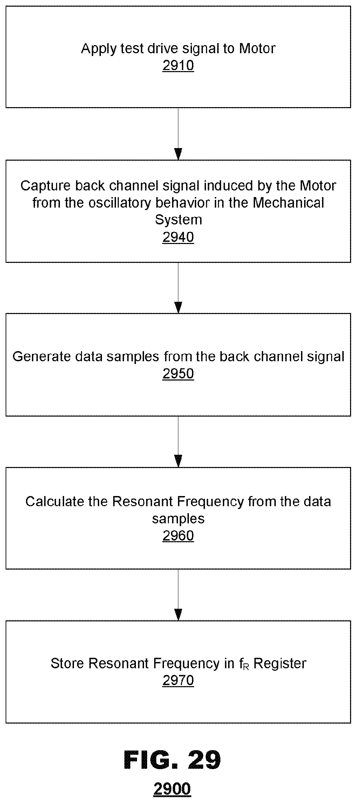

Fig. 29 is a flow diagram of a method 2900 to determine the actual resonant frequency of the mechanical system according to an embodiment of the present system. The method may include generating a test drive signal (block 2910). The test drive signal may be a unit step drive signal that has a value that is sufficient to drive the mechanical system to an intermediate position within the mechanical system's range of motion. The drive signal may be generated according to a unit step function, a ramp function, or other function that possesses non-zero energy over a broad range of candidate resonant frequencies of the mechanical system. The motor, responsive to the test drive signal, may move the mechanical system and should induce oscillatory behavior therein. The oscillations may induce an electrical signal in the back channel of the motor. The method may capture the back channel signal in the back channel sensor (block 2940). The method may generate data samples from the captured back channel signal (block 2950). From the data samples, the method may calculate the actual resonant frequency of the mechanical system (block 2960). The process may further include storing the calculated resonant frequency in the $f_R$ register (block 2970). The stored resonant frequency may then be used to generate drive signals during run time as discussed in the foregoing embodiments.

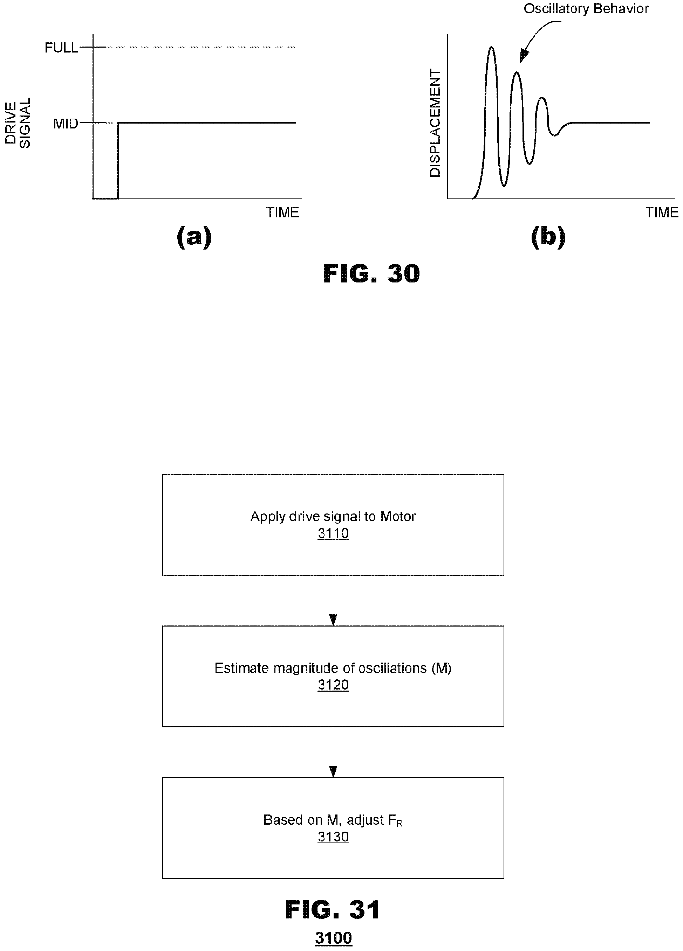

Fig. 30 shows an example of a test drive signal in Fig. 30 (a) and the corresponding movement of the mechanical system in Fig. 30 (b). The test drive signal in Fig. 30 (a) is a unit step drive signal that corresponds to the mid-point within the mechanical system's range of movement. The drive signal is applied to the motor, which causes motion in the mechanical system. The displacement of the mechanical system responsive to the mid-point drive signal is shown Fig. 30 (b). The ringing effect is seen in the beginning of the displacement graph where the mechanical system's displacement first acts with an oscillatory behavior before settling to its corresponding displacement value. The oscillatory behavior induces an electrical signal in the back channel with the same resonant frequency as the oscillations in the mechanical system.

Resonant frequency may also be calculated in a searching/adaptive process. Fig. 31 is a flow diagram of a method 3100 to adaptively adjust a stored resonant frequency value of the mechanical system according to an embodiment. The method may include applying a drive signal (block 3110). A nominal value for $f_R$ may be stored in a register at this time. The nominal value for $f_R$ may be the last $f_R$ value calculated. The drive signal may be a test drive signal or a drive signal applied in normal operation. If the drive signal is a test drive signal, it may be a unit step drive signal that has a value that is sufficient to drive the mechanical system to an intermediate position within the mechanical system's range of motion. The drive signal may be generated according to a unit step function, a ramp function, or other function that possesses non-zero energy over a broad range of candidate resonant frequencies of the mechanical system. The motor, responsive to the drive signal, may move the mechanical system and should induce oscillatory behavior therein. The method may estimate a magnitude of the oscillations, M (block 3120). According to M, the method may adjust $f_R$ (block 3130). The adjustment may depend on factors such as mechanical system orientation and step size. The method may further include storing the calculated resonant frequency in the $f_R$ register. The stored resonant frequency may then be used to generate drive signals during run time as discussed in the foregoing embodiments.

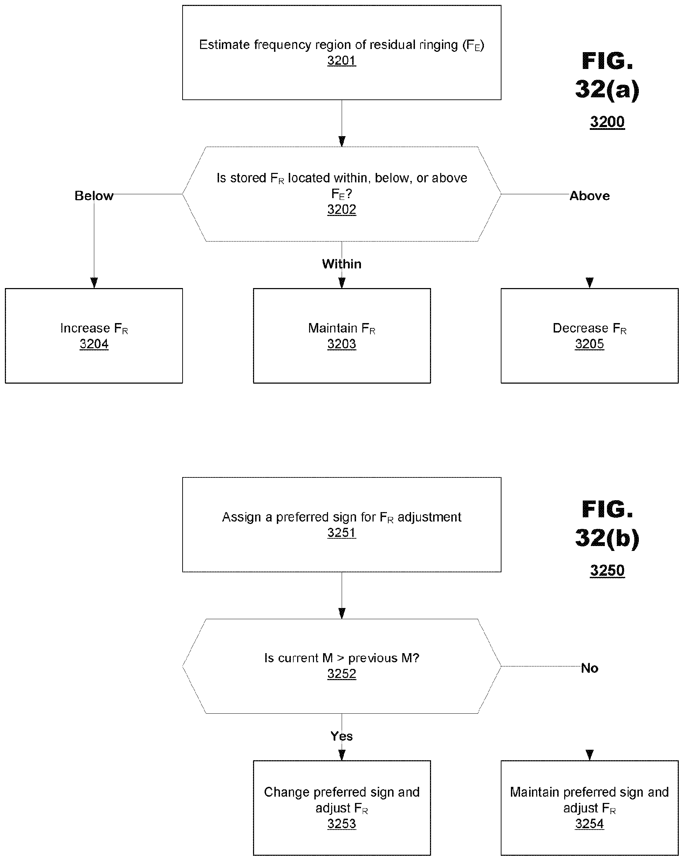

Fig. 32(a) is a flow diagram of method 3200 to calculate the $f_R$ adjustment according to an embodiment. The method may include estimating a frequency region of the oscillations, $F_E$ (block 3201). $F_E$ may have a tolerance, such as $\pm 10\%$; therefore, a precise measurement is not needed. The method may compare the stored $f_R$ and $F_E$, to check whether the stored $f_R$ is located within $F_E$, below $F_E$, or above $F_E$ (block 3202). If the stored $f_R$ is located within $F_E$, the method may maintain the stored $f_R$ (block 3203). If the stored $f_R$ is below $F_E$, the method may increase the stored $f_R$ by a predetermined amount (3204). If the stored $f_R$ is above $F_E$, the method may decrease the stored $f_R$ by a predetermined amount (block 3205). The method may further include storing the adjusted $f_R$ in the $f_R$ register.

Fig. 32(b) is a flow diagram of method 3250 to calculate the $f_R$ adjustment according to another embodiment. The method may include assigning a preferred sign (+ or -) for a $f_R$ adjustment (block 3251). The preferred sign may be assigned based on prior patterns or operation of the mechanical system. The method may detect whether the mechanical system's performance has degraded, by comparing a current oscillation magnitude to a previous oscillation magnitude (block 3252). The oscillation magnitude increasing over time indicates that the performance has degraded. If the current oscillation magnitude is greater than the previous oscillation magnitude, the method may change the preferred sign and adjust $f_R$ a predetermined amount according to the newly assigned sign (block 3253). The method may further store the changed sign as the preferred sign for the next iteration. If the oscillation magnitude is not greater than the previous oscillation magnitude, the method may maintain the preferred sign and adjust $f_R$ a predetermined about according to the preferred sign (block 3254). The predetermined amount changes to $f_R$ may be set to relatively small amounts because large variations in resonant frequency are not expected. Accordingly, method 3250 may track and adjust $f_R$ continuously.

According to an embodiment, the back channel detection system may calculate the $D_{TH}$ required to move the mechanical system from the starting mechanical stop position. Again, system manufacturers often do not know the $D_{TH}$ of their mechanical systems precisely. Moreover, particularly in consumer devices where system components must be made inexpensively, the $D_{TH}$ can vary across different manufacturing lots of a common product. Therefore, the calculation of the mechanical system's actual $D_{TH}$ rather than depending on the manufacturer's expected $D_{TH}$ improves precision in the mechanical system during use.

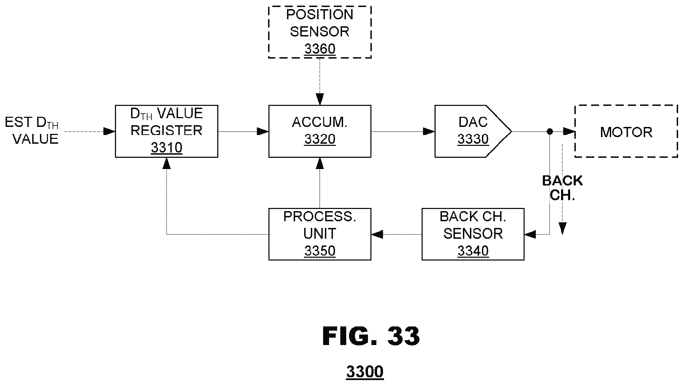

Fig. 33 illustrates an embodiment of a drive signal generator 3300 that may be incorporated in a motor driver to calculate the actual $D_{TH}$ of the mechanical system. The drive signal generator 3300 operates in an initialization mode of the motor driver. It may include an accumulator 3320 to generate a digital test drive signal, a digital-to-analog converter (DAC) 3330 to generate an analog test drive output signal based on the accumulator's digital output, which is applied to the motor of the mechanical structure, a back channel sensor 3340 to capture a back channel electrical signal, a processing unit 3350 to calculate the actual $D_{TH}$ value or instruct the accumulator 3320 to generate another digital test drive signal, and a $D_{TH}$ register 3330 to store the calculated $D_{TH}$ value. The analog signal may be generated as current or voltage.

According to an embodiment of the present invention, the drive signal generator may further include a position sensor 3360 to store the position and orientation of the mechanical system. The position sensor 3360 may be coupled to the accumulator 3320. $D_{TH}$ may be sensitive to the mechanical system's orientation. For example, a lens mechanical system may have a lower $D_{TH}$ when facing downwards because gravity's assisting force downwards, and conversely, a lens mechanical system may have a higher $D_{TH}$ when facing upwards because gravity's opposing force downwards. The position sensor 3360 may be an inclinometer, a gyroscope, or any suitable position detection device.

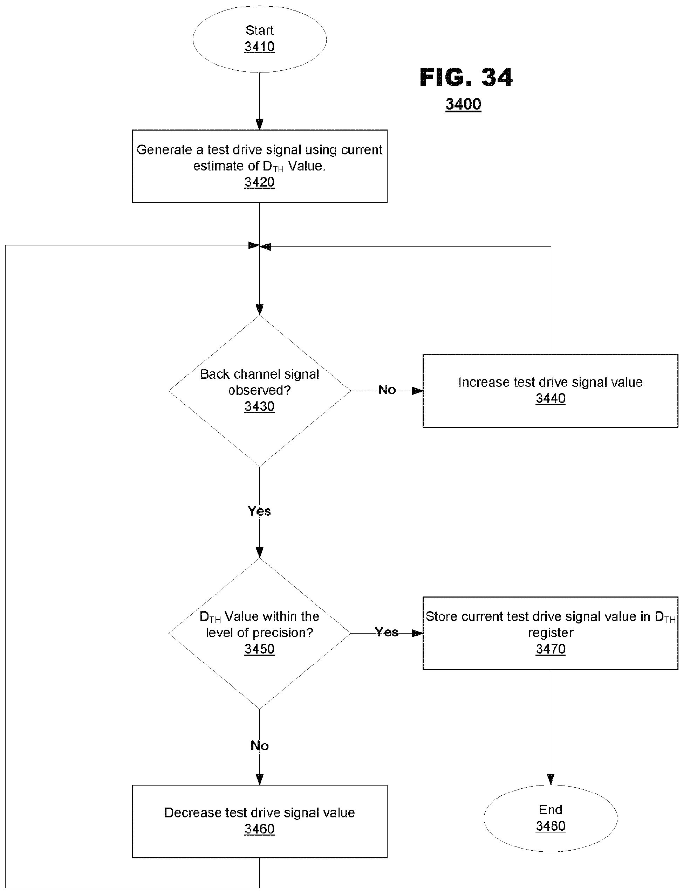

Fig. 34 is a flow diagram of a method 3400 to determine the $D_{TH}$ of the mechanical system according to an embodiment of the present system. The method 3400 may perform an iterative process to determine $D_{TH}$. The process may generate a test drive signal using a current estimate of $D_{TH}$ stored in the $D_{TH}$ register (block 3420). The test drive signal maybe generated according to a unit step function. In a first iteration, the $D_{TH}$ estimate may be a preprogrammed value but thereafter it may be set by a previous iteration. According to an embodiment, the test drive signal may be generated when a change in orientation is detected. The test drive signal may also be generated according to a detected orientation of the mechanical system. The test drive signal may be applied to the motor of the mechanical system. If the value of the test drive signal is equal to or higher than the actual $D_{TH}$, the motor should move the mechanical system, which produces oscillations in the mechanical system. The oscillations may induce an electrical signal in the back channel. However, if the value of the test drive signal is lower than the actual $D_{TH}$, the mechanical system does not move and, consequently, no back channel signal is induced.

The method 3400 may monitor the back channel for oscillations (block 3430) and determines if a back channel signal is present. If a back channel signal is not observed, the method 3400 increases the test drive signal for another iteration (block 3440). The method may repeat. If the back channel signal is observed, the processing unit checks if the current $D_{TH}$ value is within a predetermined level of precision (block 3450). This check may be done, for example, by determining if the value of $D_{TH}$ has been changed a predetermined number of times in the process. If the current $D_{TH}$ estimate is not within a level of precision, the method decreases the test drive signal (block 3440). The method may repeat.

If the $D_{TH}$ value is known to be within the level of precision, the processing unit stores the current $D_{TH}$ value in the $D_{TH}$ register as a final estimate (block 3470). Thereafter, the method may conclude. The stored $D_{TH}$ value may then be used in any embodiment of the present invention that uses expected $D_{TH}$ value. Additionally, a feedback driven search method may be implemented to improve convergence speed by calculating the amplitude of the unit step functions based on the measured parameters of the back channel responsive to previous drive signals.

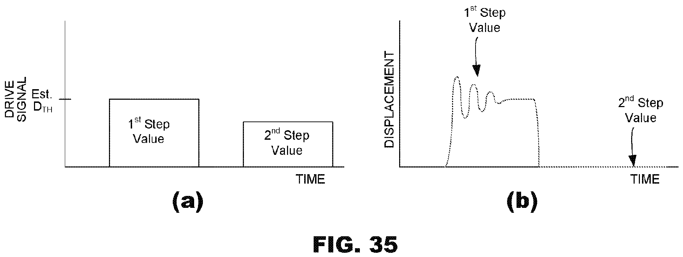

Fig. 35 shows an example of a test drive signals in Fig. 35 (a) and the corresponding movements of the mechanical system in Fig. 35 (b). The 1st Step Value test drive signal in Fig. 35 (a) is a unit step drive signal that corresponds to the estimated $D_{TH}$ value. The drive signal is applied to the motor, which causes motion in the mechanical system. The displacement of the mechanical system responsive to the 1st Step Value test drive signal is shown Fig. 35 (b). The ringing effect is seen in the beginning of the displacement graph where the mechanical system's displacement first acts with an oscillatory behavior before settling to its corresponding displacement value. The oscillatory behavior induces an electrical signal in the back channel with the same resonant frequency as the oscillations in the mechanical system. The 2nd Step Value test drive signal, which is lower in magnitude than the 1st Step Value test drive signal, does not cause the motor to be driven so no movement in the mechanical system hence no oscillatory behavior as shown in Fig. 35. Therefore, the 2nd Step Value test drive signal was lower than the actual $D_{TH}$. The process would continue by generating a 3rd Step Value (not shown) in between the 1st and 2nd Step Value and monitoring for oscillatory behavior iteratively until a $D_{TH}$ value is determined within the level of precision.

Both the resonant frequency, $f_R$, and $D_{TH}$ value may be determined in an initialization mode. The initialization mode may be triggered when the mechanical system is first turned on, or every time the mechanical system is turned on, or at other predetermined times. The $f_R$ and $D_{TH}$ value calculating processes may also be performed concurrently or successively in the same initialization mode or in different initialization modes. If both processes are performed concurrently, the same test drive signal may be used for both processes with the processing unit calculating both actual $f_R$ and $D_{TH}$ value using the same back channel signal. If both processes are performed successively, the processes may be performed in either order. Additionally, $D_{TH}$ value may be modified when an orientation change is detected according to a function or look-up-table (LUT).

Several embodiments of the present invention are specifically illustrated and described herein. However, it will be appreciated that modifications and variations of the present invention are covered by the above teachings and within the purview of the appended claims without departing from the spirit and intended scope of the invention. Additionally, it will be appreciated that the signals illustrated above represent idealized forms of drive signals with instantaneous response; in practice, some amount of slew can be expected from a motor driver in actual operating conditions. Such effects have been omitted from the foregoing discussion so as not to obscure the principles of the present invention.

**Claims**

1. A method for generating a drive signal to a motor-driven mechanical system, comprising:

    applying a drive signal to the motor-driven mechanical system (130, 140) in a series of steps according to a selected row of Pascal's triangle, wherein:

    the number of steps equals the number of entries from the selected row of Pascal's triangle wherein the selected row is at least a second row of Pascal's triangle,
    **characterized in that** each step has a step size corresponding to a respective entry of the selected row of Pascal's triangle, and
the steps are spaced from each other according to a time constant tc, by:

$$t_c \cong \frac{1}{2f_R}$$

where $f_R$ is an expected resonant frequency of the mechanical system.

2. A method for generating a drive signal as claimed in claim 1, in which the selected row is at least the third row of Pascal's triangle.

3. The method of claim 1 or 2, further comprising,
responsive to a codeword that identifies a destination position of the mechanical system, determining an amplitude of the drive signal having components representing: a) a start position of the mechanical system and b) a difference between the start position and the destination position,
wherein the amplitude component corresponding to the difference is distributed across the time spaced steps of the drive signal.

4. The method of claim 1 or 2, further comprising, when a start position of the mechanical system is a rest position, determining an amplitude of the drive signal having a) a first component corresponding to a drive signal level required to move the mechanical system from the rest position and b) a differential component corresponding to a difference between the first component and a drive signal level required to move the mechanical system to the destination position,
wherein the differential component is distributed across the time spaced steps of the drive signal, and
wherein the first component is applied in the first step of the drive signal.

5. The method of claims 1 to 4, wherein the mechanical system is a lens system having a multi-dimensional range of motion, the image signal processor generates codewords corresponding to each dimension and the method generates multiple drive signals, one corresponding to each of the codewords.

6. A method for generating a drive signal to a motor-driven mechanical system, comprising:

applying a drive signal to the motor-driven mechanical system (130, 140) in a series of steps according to a selected row of Pascal's triangle, wherein:

the steps are grouped into a number of intervals, **characterized in that** the number of intervals equals the number of entries from the selected row of Pascal's triangle, where the selected row is at least the second row of Pascal's triangle,
each step has a uniform step size,
each interval includes a number of steps corresponding to a respective entry from the selected row of Pascal's triangle, and
the intervals are spaced from each other according to a time constant $t_c$, by:

$$t_c \cong \frac{1}{2f_R}$$

where $f_R$ is an expected resonant frequency of the mechanical system.

7. A method for generating a drive signal as claimed in claim 6, in which the selected row is at least the third row of Pascal's triangle.

8. The method of claim 6 to 7, further comprising,
responsive to a codeword that identifies a destination position of the mechanical system, determining an amplitude of the drive signal having components representing: a) a start position of the mechanical system and b) a difference between the start position and the destination position,
wherein the step size is determined from the difference component.

9. The method of claim 6 or 7, further comprising, when a start position of the mechanical system is a rest position, determining an amplitude of the drive signal having a) a first component corresponding to a drive signal level required to move the mechanical system from the rest position and b) a differential component corresponding to a difference between the first component and a drive signal level required to move the mechanical system to the destination position,
wherein the step size is determined from the difference component, and
wherein the first component is applied in the first step of the drive signal.

10. The method of claims 1 to 4 or 6 to 9, wherein an amplitude of the steps is determined from a codeword generated by an image processing system and the drive signal is applied to a lens drive motor.

11. The method of claims 1 to 4 or 6 to 9, wherein an amplitude of the steps is determined from a codeword is generated by an touch panel controller and the drive signal is applied to a haptic effect motor coupled to a touch panel.

12. The method of claims 1 to 4 or 6 to 9, wherein an amplitude of the steps is determined from a codeword is generated by an disk controller and the drive signal is applied to a swing arm-based disk reader or a sled-based disk reader.

13. A drive signal generator, comprising:

a tap register (1630) storing patterns representing rows of Pascal's triangle and responsive to a control signal identifying a selected row;
a timing engine (1330) to drive the tap register (1340) at time intervals corresponding to a time constant tc:

$$t_c \cong \frac{1}{2f_R}$$

where $f_R$ is an expected resonant frequency of a mechanical system (130, 140) to be driven by the drive signal generator; and
an accumulator (1350), responsive to the tap register (1340) and to data representing a start position and a destination position of the mechanical system to generate a stepped drive signal, wherein:
a number of steps equals the number of entries from the selected row of Pascal's triangle, the selected row being at least the second row of Pascal's triangle,
each step has a step size corresponding to a difference between the start position and destination position and to a respective entry of the selected row of Pascal's triangle, and
the steps are spaced from each other according to the time constant tc; and
a digital to analog converter (1360) to generate an analog representation of the stepped drive signal.

14. A drive signal generator, comprising:

a tap register (1730) storing patterns representing rows of Pascal's triangle, the patterns each containing intervals of a number of uniform steps, the number of intervals corresponding to the number of entries of Pascal's triangle, the number of steps in each interval corresponding to the value of a respective entry of Pascal's triangle;
an adder (1740), responsive to output from the tap register (1730) and to data representing a start position and a destination position of the mechanical system to generate a stepped drive signal, wherein the stepped drive signal has an amplitude corresponding to an accumulated number of steps output from the tap register where the outputs correspond to at least the second row of Pascal's triangle and further corresponding to a difference between a start position and a destination position,
a timing engine to drive the tap register, wherein the timing engine causes the tap register to output steps in intervals, the intervals are spaced from each other by a time constant tc, by:

$$t_c \cong \frac{1}{2f_R}$$

Where $f_R$ is an expected resonant frequency of the mechanical system, and steps within each interval are spaced from each other by a time constant shorter than tc.

**EP 2 216 899 B1**

**15.** A method for generating a drive signal to a motor-driven mechanical system, comprising:

applying a drive signal to the motor-driven mechanical system in a series of steps, wherein:

the number of steps are directly related to a distance to be traversed by the motor-driven mechanical system, and
the drive signal causes the motor-driven mechanical system to traverse the distance in a predetermined time tp that is independent of the distance.

**16.** A drive signal generator, comprising:

a ramp modulator, responsive to a step clock rate and a net distance, to generate a step response signal;
an accumulator, responsive to the step response signal, to generate a stepped drive signal; and
a digital to analog converter to generate a drive signal,
wherein the drive signal causes a motor-driven mechanical system to traverse the net distance in a predetermined time that is independent of the net distance.

**17.** The drive signal generator of claim 16, wherein the step clock rate corresponds to a number of steps in the drive signal and the number of steps in the drive signal is dependant on the net distance.

**Patentansprüche**

**1.** Verfahren zum Erzeugen eines Ansteuerungssignals für ein motorgetriebenes mechanisches System, das Folgendes umfasst:

Anwenden eines Ansteuerungssignals in das motorgetriebene mechanische System (130, 140) in einer Reihe von Stufen in Übereinstimmung mit einer ausgewählten Reihe eines pascalschen Dreiecks, wobei:

die Anzahl von Stufen gleich der Anzahl von Einträgen ab der ausgewählten Reihe des pascalschen Dreiecks ist, wobei die ausgewählte Reihe wenigstens eine zweite Reihe des pascalschen Dreiecks ist, **dadurch gekennzeichnet, dass** jede Stufe eine Stufengröße hat, die einem entsprechenden Eintrag der ausgewählten Reihe des pascalschen Dreiecks entspricht, und
die Stufen in Übereinstimmung mit einer Zeitkonstanten tc voneinander beabstandet sind, wobei:

$$t_C \cong 1/(2f_R),$$

wobei $f_R$ eine erwartete Resonanzfrequenz des mechanischen Systems ist.

**2.** Verfahren zum Erzeugen eines Ansteuerungssignals nach Anspruch 1, wobei die ausgewählte Reihe wenigstens die dritte Reihe des pascalschen Dreiecks ist.

**3.** Verfahren nach Anspruch 1 oder 2, das ferner Folgendes umfasst:

in Reaktion auf ein Codewort, das eine Zielposition des mechanischen Systems identifiziert, Bestimmen einer Amplitude des Ansteuerungssignals, die Komponenten besitzt, die a) eine Startposition des mechanischen Systems bzw. b) eine Differenz zwischen der Startposition und der Zielposition repräsentieren, wobei die Amplitudenkomponente, die der Differenz entspricht, über die zeitlich beabstandeten Stufen des Ansteuerungssignals hinweg verteilt sind.

**4.** Verfahren nach Anspruch 1 oder 2, das ferner dann, wenn eine Startposition des mechanischen Systems eine Ruheposition ist, Folgendes umfasst:

Bestimmen einer Amplitude des Ansteuerungssignals, die a) eine erste Komponente besitzt, die einem Ansteuerungssignalpegel entspricht, der erforderlich ist, um das mechanische System aus der Ruheposition zu bewegen, und b) eine differentielle Komponente besitzt, die eine Differenz zwischen der ersten Komponente und einem Ansteuerungssignalpegel, der erforderlich ist, um das mechanische System in die Zielposition zu bewegen, entspricht,
wobei die differentielle Komponente über die zeitlich beabstandeten Stufen des Ansteuerungssignals hinweg verteilt ist und
wobei die erste Komponente in der ersten Stufe des Ansteuerungssignals eingegeben wird.

5. Verfahren nach den Ansprüchen 1 bis 4, wobei das mechanische System ein Linsensystem ist, das einen mehrdimensionalen Bewegungsbereich besitzt, wobei der Bildsignalprozessor Codewörter erzeugt, die jeder Dimension entsprechen, und das Verfahren mehrere Ansteuerungssignale erzeugt, wovon jedem der Codewörter eines entspricht.

6. Verfahren zum Erzeugen eines Ansteuerungssignals eines motorgetriebenen mechanischen Systems, das Folgendes umfasst:

Eingeben eines Ansteuerungssignals in das motorgetriebene mechanische System (130, 140) in einer Reihe von Stufen in Übereinstimmung mit einer ausgewählten Reihe eines pascalschen Dreiecks, wobei:

die Stufen in eine Anzahl von Intervallen gruppiert sind, **dadurch gekennzeichnet, dass** die Anzahl von Intervallen gleich der Anzahl von Einträgen ab der ausgewählten Reihe des pascalschen Dreiecks ist, wobei die ausgewählte Reihe wenigstens die zweite Reihe des pascalschen Dreiecks ist,
wobei jede Stufe eine gleichmäßige Stufengröße hat,
wobei jedes Intervall eine Anzahl von Stufen enthält, die einem jeweiligen Eintrag ab der ausgewählten Reihe des pascalschen Dreiecks entspricht, und
wobei die Intervalle in Übereinstimmung mit einer Zeitkonstanten tc voneinander beabstandet sind, wobei:

$$t_C \cong 1/(2f_R),$$

wobei $f_R$ eine erwartete Resonanzfrequenz des mechanischen Systems ist.

7. Verfahren zum Erzeugen eines Ansteuerungssignals nach Anspruch 6, wobei die ausgewählte Reihe wenigstens die dritte Reihe des pascalschen Dreiecks ist.

8. Verfahren nach Anspruch 6 bis 7, das ferner Folgendes umfasst:

in Reaktion auf ein Codewort, das eine Zielposition des mechanischen Systems identifiziert, Bestimmen einer Amplitude des Ansteuerungssignals, die Komponenten besitzt, die a) eine Startposition des mechanischen Systems bzw. b) eine Differenz zwischen der Startposition und der Zielposition repräsentieren,
wobei die Stufengröße anhand der Differenzkomponente bestimmt wird.

9. Verfahren nach Anspruch 6 oder 7, das ferner dann, wenn eine Startposition des mechanischen Systems eine Ruheposition ist, Folgendes umfasst:

Bestimmen einer Amplitude des Ansteuerungssignals, die a) eine erste Komponente besitzt, die einem Ansteuerungssignalpegel entspricht, der erforderlich ist, um das mechanische System aus der Ruheposition zu bewegen, und b) eine differentielle Komponente besitzt, die einer Differenz zwischen der ersten Komponente und einem Ansteuerungssignalpegel, der erforderlich ist, um das mechanische System in die Zielposition zu bewegen, entspricht,
wobei die Stufengröße aus der Differenzkomponente bestimmt wird und
wobei die erste Komponente in der ersten Stufe des Ansteuerungssignals eingegeben wird.

10. Verfahren nach den Ansprüchen 1 bis 4 oder 6 bis 9, wobei eine Amplitude der Stufen aus einem Codewort bestimmt wird, das durch ein Bildverarbeitungssystem erzeugt wird, und das Ansteuerungssignal in einen Linsenantriebsmotor eingegeben wird.

11. Verfahren nach den Ansprüchen 1 bis 4 oder 6 bis 9, wobei eine Amplitude der Stufen aus einem Codewort bestimmt wird, das durch eine Berührungstafel-Steuereinheit erzeugt wird, und das Ansteuerungssignal in einen Motor für haptische Wirkung, der mit einer Berührungstafel gekoppelt ist, eingegeben wird.

12. Verfahren nach den Ansprüchen 1 bis 4 oder 6 bis 9, wobei eine Amplitude der Stufen aus einem Codewort bestimmt wird, das durch eine Plattensteuereinheit erzeugt wird, und das Ansteuerungssignal in einen armbasierten Plattenleser oder einen schlittenbasierten Plattenleser eingegeben wird.

13. Ansteuerungssignalgenerator, der Folgendes umfasst:

ein Abgriffregister (1630), das Muster speichert, die Reihen eines pascalschen Dreiecks repräsentieren, und das auf ein Steuersignal anspricht, das eine ausgewählte Reihe identifiziert; eine Zeitvorgabemaschine (1330), um das Abgriffregister (1340) in Zeitintervallen, die einer Zeitkonstanten tc entsprechen, anzusteuern, wobei:

$$t_C \cong 1/(2f_R),$$

wobei $f_R$ eine erwartete Resonanzfrequenz eines mechanischen Systems (130, 140) ist, das durch den Ansteuerungssignalgenerator angesteuert werden soll; und einen Akkumulator (1350), der auf das Abgriffregister (1340) und auf Daten anspricht, die eine Startposition und eine Zielposition des mechanischen Systems repräsentieren, um ein gestuftes Ansteuerungssignal zu erzeugen, wobei: eine Anzahl von Stufen gleich der Anzahl von Einträgen ab der ausgewählten Reihe des pascalschen Dreiecks ist, wobei die ausgewählte Reihe wenigstens die zweite Reihe des pascalschen Dreiecks ist, wobei jede Stufe eine Stufengröße hat, die eine Differenz zwischen der Startposition und der Zielposition und einem entsprechenden Eintrag der ausgewählten Reihe des pascalschen Dreiecks entspricht, und wobei die Stufen in Übereinstimmung mit der Zeitkonstanten tc voneinander beabstandet sind; und einen Digital/Analog-Umsetzer (1360), um eine analoge Darstellung des gestuften Ansteuerungssignals zu erzeugen.

14. Ansteuerungssignalgenerator, der Folgendes umfasst:

ein Abgriffregister (1730), das Muster speichert, die Reihen eines pascalschen Dreiecks repräsentieren, wobei die Muster jeweils Intervalle aus einer Anzahl gleichmäßiger Stufen enthalten, wobei die Anzahl der Intervalle der Anzahl von Einträgen des pascalschen Dreiecks entspricht, wobei die Anzahl von Stufen in jedem Intervall dem Wert eines entsprechenden Eintrags des pascalschen Dreiecks entspricht; einen Addierer (1740), der auf eine Ausgabe von dem Abgriffregister (1730) und auf Daten, die eine Startposition und eine Zielposition des mechanischen Systems darstellen, anspricht, um ein gestuftes Ansteuerungssignal zu erzeugen, wobei das gestufte Ansteuerungssignal eine Amplitude besitzt, die einer akkumulierten Anzahl von Stufen entspricht, die von dem Abgriffregister ausgegeben werden, wobei die Ausgänge wenigstens der zweiten Reihe des pascalschen Dreiecks entsprechen und ferner einer Differenz zwischen einer Startposition und einer Zielposition entsprechen, eine Zeitvorgabemaschine, um das Abgriffregister anzusteuern, wobei die Zeitvorgabemaschine das Abgriffregister dazu veranlasst, Stufen in Intervallen auszugeben, wobei die Intervalle durch eine Zeitkonstante tc voneinander beabstandet sind, wobei:

$$t_C \cong 1/(2f_R),$$

wobei $f_R$ eine erwartete Resonanzfrequenz des mechanischen Systems ist und Stufen in jedem Intervall um eine Zeitkonstante, die kürzer als $t_C$ ist, voneinander beabstandet sind.

15. Verfahren zum Erzeugen eines Ansteuerungssignals für ein motorgetriebenes mechanisches System, das Folgendes umfasst:

Eingeben eines Ansteuerungssignals in das motorgetriebene mechanische System in einer Reihe von Stufen, wobei:

die Anzahl von Stufen direkt mit einem Abstand in Beziehung steht, der von dem motorgetriebenen mechanischen System durchquert werden soll, und

das Ansteuerungssignal das motorgetriebene mechanische System dazu veranlasst, den Abstand in einer vorgegebenen Zeit tp, die von dem Abstand unabängig ist, zu durchqueren.

16. Ansteuerungssignalgenerator, der Folgendes umfasst:

einen Rampenmodulator, der in Reaktion auf eine Stufentaktrate und einen Nettoabstand ein Stufenantwortsignal erzeugt;
einen Akkumulator, der in Reaktion auf das Stufenantwortsignal ein gestuftes Ansteuerungssignal erzeugt; und
einen Digital/Analog-Umsetzer, um ein Ansteuerungssignal zu erzeugen,
wobei das Ansteuerungssignal ein motorgetriebenes mechanisches System dazu veranlasst, den Nettoabstand in einer vorgegebenen Zeit, die von dem Nettoabstand unabhängig ist, zu durchqueren.

17. Ansteuerungssignalgenerator nach Anspruch 6, wobei die Stufentaktrate einer Anzahl von Stufen in dem Ansteuerungssignal entspricht und die Anzahl von Stufen in dem Ansteuerungssignal von dem Nettoabstand abhängt.

**Revendications**

1. Procédé pour générer un signal d'entraînement sur un système mécanique motorisé, comprenant :

- l'application d'un signal d'entraînement au système mécanique motorisé (130, 140) lors d'une série de marches selon une rangée sélectionnée d'un triangle de Pascal, dans lequel :

• le nombre de marches est égal au nombre d'entrées depuis la rangée sélectionnée d'un triangle de Pascal dans lequel la rangée sélectionnée est au moins une deuxième rangée du triangle de Pascal,

**caractérisé en ce que** chaque marche a une taille de marche correspondant à une entrée respective de la rangée sélectionnée du triangle de Pascal, et **en ce que** les marches sont espacées les unes des autres selon une constante de temps $t_c$, définie par :

$$t_c \cong \frac{1}{2f_R}$$

où $f_R$ est une fréquence de résonance attendue du système mécanique.

2. Procédé pour générer un signal d'entraînement selon la revendication 1, dans lequel la rangée sélectionnée est au moins la troisième rangée du triangle de Pascal.

3. Procédé selon la revendication 1 ou 2, comprenant en outre, en réponse à un mot de code qui identifie une position de destination du système mécanique, la détermination d'une amplitude du signal d'entraînement ayant des composantes représentant : a) une position de départ du système mécanique et b) une différence entre la position de départ et la position de destination,
dans lequel la composante d'amplitude correspondant à la différence est répartie sur les marches espacées dans le temps du signal d'entraînement.

4. Procédé selon la revendication 1 ou 2, comprenant en outre, quand une position de départ du système mécanique est une position de repos,
la détermination d'une amplitude du signal d'entraînement ayant a) une première composante correspondant à un niveau de signal d'entraînement nécessaire pour déplacer le système mécanique depuis la position de repos et b) une composante de différentiel correspondant à une différence entre la première composante et un niveau de signal d'entraînement nécessaire pour déplacer le système mécanique jusqu'à la position de destination,
dans lequel la composante de différentiel est répartie sur les marches espacées dans le temps du signal d'entraînement, et
dans lequel la première composante est appliquée dans la première marche du signal d'entraînement.

**5.** Procédé selon les revendications 1 à 4, dans lequel le système mécanique est un système de lentille ayant une plage de mouvement multidimensionnelle, le processeur de signal d'image génère des mots de code correspondant à chaque dimension et le procédé génère de multiples signaux d'entraînement, un signal correspondant à chacun des mots de code.

**6.** Procédé pour générer un signal d'entraînement sur un système mécanique motorisé, comprenant :

- l'application d'un signal d'entraînement au système mécanique motorisé (130, 140) lors d'une série de marches selon une rangée sélectionnée d'un triangle de Pascal, dans lequel :

    • les marches sont groupées en un nombre d'intervalles, **caractérisé en ce que** le nombre d'intervalles est égal au nombre d'entrées depuis la rangée sélectionnée d'un triangle de Pascal, où la rangée sélectionnée est au moins la deuxième rangée du triangle de Pascal,
    • chaque marche a une taille de marche uniforme,
    • chaque intervalle comporte un nombre de marches correspondant à une entrée respective depuis la rangée sélectionnée du triangle de Pascal, et
    • les intervalles sont espacés les uns des autres selon une constante de temps $t_c$ définie par :

$$t_c \cong \frac{1}{2f_R}$$

où $f_R$ est une fréquence de résonance attendue du système mécanique.

**7.** Procédé pour générer un signal d'entraînement selon la revendication 6, dans lequel la rangée sélectionnée est au moins la troisième rangée du triangle de Pascal.

**8.** Procédé selon la revendication 6 à 7, comprenant en outre,
en réponse à un mot de code qui identifie une position de destination du système mécanique, la détermination d'une amplitude du signal d'entraînement ayant des composantes représentant : a) une position de départ du système mécanique et b) une différence entre la position de départ et la position de destination,
dans lequel la taille de marche est déterminée à partir de la composante de différence.

**9.** Procédé selon la revendication 6 ou 7, comprenant en outre, quand une position de départ du système mécanique est une position de repos,
la détermination d'une amplitude du signal d'entraînement ayant a) une première composante correspondant à un niveau de signal d'entraînement nécessaire pour déplacer le système mécanique depuis la position de repos et b) une composante de différentiel correspondant à une différence entre la première composante et un niveau de signal d'entraînement nécessaire pour déplacer le système mécanique jusqu'à la position de destination,
dans lequel la taille de marche est déterminée à partir de la composante de différence, et
dans lequel la première composante est appliquée dans la première marche du signal d'entraînement.

**10.** Procédé selon les revendications 1 à 4 ou 6 à 9, dans lequel une amplitude des marches est déterminée à partir d'un mot de code généré par un système de traitement d'image et le signal d'entraînement est appliqué à un moteur d'entraînement à lentille.

**11.** Procédé selon les revendications 1 à 4 ou 6 à 9, dans lequel une amplitude des marches est déterminée à partir d'un mot de code généré par un dispositif de commande à écran tactile et le signal d'entraînement est appliqué à un moteur à effet haptique couplé à un écran tactile.

**12.** Procédé selon les revendications 1 à 4 ou 6 à 9, dans lequel une amplitude des marches est déterminée à partir d'un mot de code généré par un dispositif de commande à disque et le signal d'entraînement est appliqué à un lecteur de disque basé sur un bras oscillant ou un lecteur de disque basé sur un traîneau.

**13.** Générateur de signal d'entraînement, comprenant :

- un registre de prises (1630) stockant des motifs représentant des rangées d'un triangle de Pascal et répondant à un signal de commande identifiant une rangée sélectionnée ;

- un moteur de temporisation (1330) pour entraîner le registre de prises (1340) à intervalles de temps correspondant à une constante de temps $t_c$ :

$$t_c \cong \frac{1}{2f_R}$$

où $f_R$ est une fréquence de résonance attendue d'un système mécanique (130, 140) à entraîner par le générateur de signal d'entraînement ; et
- un accumulateur (1350), en réponse au registre de prises (1340) et à des données représentant une position de départ et une position de destination du système mécanique pour générer un signal d'entraînement échelonné, dans lequel :

  • un nombre de marches est égal au nombre d'entrées depuis la rangée sélectionnée d'un triangle de Pascal, la rangée sélectionnée étant au moins la deuxième rangée du triangle de Pascal,
  • chaque marche a une taille de marche correspondant à une différence entre la position de départ et la position de destination et à une entrée respective de la rangée sélectionnée du triangle de Pascal, et
  • les marches sont espacées les unes des autres selon la constante de temps $t_c$ ; et

- un convertisseur numérique-analogique (1360) pour générer une représentation analogique du signal d'entraînement échelonné.

**14.** Générateur de signal d'entraînement, comprenant :

- un registre de prises (1730) stockant des motifs représentant des rangées d'un triangle de Pascal, les motifs contenant chacun des intervalles d'un nombre de marches uniformes, le nombre d'intervalles correspondant au nombre d'entrées du triangle de Pascal, le nombre de marches dans chaque intervalle correspondant à la valeur d'une entrée respective du triangle de Pascal ;
- un additionneur (1740), en réponse à une sortie provenant du registre de prises (1730) et à des données représentant une position de départ et une position de destination du système mécanique pour générer un signal d'entraînement échelonné, dans lequel le signal d'entraînement échelonné a une amplitude correspondant à un nombre accumulé de marches sorti du registre de prises où les sorties correspondent à au moins la deuxième rangée du triangle de Pascal et correspondant en outre à une différence entre une position de départ et une position de destination,
- un moteur de temporisation pour entraîner le registre de prises, dans lequel le moteur de temporisation amène le registre de prises à sortir des marches dans des intervalles, les intervalles sont espacés les uns des autres par une constante de temps $t_c$ définie par :

$$t_c \cong \frac{1}{2f_R}$$

où $f_R$ est une fréquence de résonance attendue du système mécanique, et les marches dans chaque intervalle sont espacées les unes des autres par une constante de temps plus courte que $t_c$.

**15.** Procédé pour générer un signal d'entraînement sur un système mécanique motorisé, comprenant :

- l'application d'un signal d'entraînement au système mécanique motorisé lors d'une série de marches, dans lequel :

  • le nombre de marches est directement lié à une distance à parcourir par le système mécanique motorisé, et le signal d'entraînement amène le système mécanique motorisé à parcourir la distance en un temps prédéterminé tp qui est indépendant de la distance.

**16.** Générateur de signal d'entraînement, comprenant :

- un modulateur de rampe, répondant à une fréquence d'horloge de marche et à une distance nette, pour générer un signal de réponse de marche ;

- un accumulateur, répondant au signal de réponse de marche, pour générer un signal d'entraînement échelonné ; et
- un convertisseur numérique-analogique pour générer un signal d'entraînement, dans lequel le signal d'entraînement amène un système mécanique motorisé à parcourir la distance nette en un temps prédéterminé qui est indépendant de la distance nette.

17. Générateur de signal d'entraînement selon la revendication 16, dans lequel la fréquence d'horloge de marche correspond à un nombre de marches dans le signal d'entraînement et le nombre de marches dans le signal d'entraînement dépend de la distance nette.

MOTOR
DRIVER
120

DRIVE
SIGNAL

VOICE COIL
MOTOR 130

CODE

**FIG. 1**

IMAGING
CHIP 110

LIGHT

140

MAGNITUDE

**FIG. 2**

$f_R$

FREQ

RESPONSE OF
MECHANICAL SYSTEM

**(a)**

**FIG. 3**

**(b)**

FIG. 4

Ringing: Mechanical Displacment
Caused by Drive Signal with Step

Drive Signal with Step

FIG. 5

DRIVE SIGNAL

$P_{NEW}$

$P_{OLD}$

$t_0$    $t_0+t_c$    TIME

FIG. 6

AMPLITUDE

$t_c$    TIME

FIG. 7

PROPOSED
DRIVE SIGNAL

STEP DRIVE
SIGNAL

$f_R$    FREQ

23

# FIG. 8

# FIG. 9

## FIG. 10

1 FILTERING $f_R$
STAGE

2 FILTERING
STAGES

3 FILTERING
STAGES

NOTCH→

4 FILTERING
STAGES

| DRIVE SIGNAL GEN. 1110 | → | NOTCH LIMIT FILTER 1120.1 | → | NOTCH LIMIT FILTER 1120.2 | • • • → | NOTCH LIMIT FILTER 1120.N | → FILTERED DRIVE SIGNAL |

## FIG. 11

## FIG. 12

(a) DRIVE SIGNAL (1 STAGE)

(b) DRIVE SIGNAL (2 STAGES)

(c) DRIVE SIGNAL (3 STAGES)

(d) DRIVE SIGNAL (4 STAGES)

**FIG. 13**
1300

**FIG. 14**

FIG. 15

SYS CLK

$f_R$ REGISTER 1610

TAP REGISTER 1630

N SELECT

Σ 1640

1670

1680

**FIG. 16**
1600

DAC 1690

DRIVE OUT

1650

INPUT: NEW POSITION

+ −

ΔP

÷2$^N$

1660

OLD POSITION REGISTER 1620

SYS CLK

| f_R REGISTER 1710 | → | TAP REGISTER 1730 | ← N SELECT |

**FIG. 17**
**1700**

Σ 1740

DAC 1780 → DRIVE OUT

1750

INPUT: NEW POSITION → + ΔP → VALUE REGISTER 1760

OLD POSITION REGISTER 1720

**FIG. 18**

<u>1800</u>

**FIG. 19**

<u>1900</u>

MOTOR DRIVER
2020

PITCH DRIVE
SIGNAL

2020.1 — X DRIVE
2020.2 — Y DRIVE
2020.3 — Z DRIVE

PITCH MOTOR
2030

YAW MOTOR
DRIVE SIGNAL

CODE

2010.3 — OIS
2010.2 — MOT.S.
2010.1 — FOCUS

2010.1

LIGHT

2060

IMAGING CHIP 2010

YAW MOTOR
2040

**FIG. 20**
**2000**

AUTO FOCUS
MOTOR 2050

AUTO FOCUS
DRIVE SIGNAL

2120

2110

INPUT
SIGNAL

OUTPUT
SIGNAL

2140

2130

ACTIVATION
SIGNAL

SWITCH
DRIVER 2150

**FIG. 21**
**2100**

## FIG. 22
### 2200

ACTIVATION SIGNAL → MIRROR DRIVER 2240

2230

OPTICAL TRANSMITTER 2210 → OPTICAL RECEIVER 2220

2nd OPTICAL RECEIVER 2250

## FIG. 23
### 2300

MOTOR DRIVER 2330 — **DRIVE SIGNAL** → HAPTIC EFFECT MOTOR 2340

FORCE

**CODE**

TOUCH SCREEN CONTROLLER 2320 ← **DATA** — TOUCH SCREEN DEVICE 2310

## FIG. 24
### 2400

2430

2440

2410

2420

MOTOR DRIVER 2450 ← CODE

**FIG. 25**

2500

**FIG. 26**

## FIG. 27
2700

```
MOTOR          DRIVE          MOTOR          MECHANICAL
DRIVER         SIGNAL         2730           STRUCTURE
2720                                          2750

               BACK
               CHANNEL

CODE                          MECHANICAL
                              SYSTEM
CONTROL                       2740
CHIP
2710
```

## FIG. 28
2800

```
EST RES.    fR REGISTER    ACCUM.      DAC         MOTOR
FREQ.       2810           2820        2830
                                                    BACK
                                                    CH.
            PROCESS.       BACK CH.
            UNIT           SENSOR
            2850           2840
```

Apply test drive signal to Motor
2910

Capture back channel signal induced by the Motor
from the oscillatory behavior in the Mechanical
System
2940

Generate data samples from the back channel signal
2950

Calculate the Resonant Frequency from the data
samples
2960

Store Resonant Frequency in $f_R$ Register
2970

# FIG. 29
2900

FULL

DRIVE SIGNAL

MID

TIME

**(a)**

Oscillatory Behavior

DISPLACEMENT

TIME

**(b)**

# FIG. 30

Apply drive signal to Motor
3110

Estimate magnitude of oscillations (M)
3120

Based on M, adjust $F_R$
3130

# FIG. 31

3100

Estimate frequency region of residual ringing ($F_E$)
3201

**FIG. 32(a)**
3200

Is stored $F_R$ located within, below, or above $F_E$?
3202

Below

Above

Within

Increase $F_R$
3204

Maintain $F_R$
3203

Decrease $F_R$
3205

Assign a preferred sign for $F_R$ adjustment
3251

**FIG. 32(b)**
3250

Is current M > previous M?
3252

No

Yes

Change preferred sign and adjust $F_R$
3253

Maintain preferred sign and adjust $F_R$
3254

POSITION
SENSOR
3360

EST D$_{TH}$
VALUE

D$_{TH}$ VALUE
REGISTER
3310

ACCUM.
3320

DAC
3330

MOTOR

BACK
CH.

PROCESS.
UNIT
3350

BACK CH.
SENSOR
3340

**FIG. 33**

3300

**FIG. 34**
3400

Start
3410

Generate a test drive signal using current estimate of $D_{TH}$ Value.
3420

Back channel signal observed?
3430

— No → Increase test drive signal value
3440

Yes

$D_{TH}$ Value within the level of precision?
3450

— Yes → Store current test drive signal value in $D_{TH}$ register
3470

No

Decrease test drive signal value
3460

End
3480

**FIG. 35**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61150958 B
- US 12367883 B
- US 12367938 B
- WO 2009116453 A